# EUROPEAN PATENT APPLICATION

(11) **EP 2 461 567 A1**
(43) Date of publication of application: **06.06.2012**
(21) Application number: 10804290.4
(22) Date of filing: 21.07.2010
(51) Int. Cl.: H04N 5/225, G03B 15/00, G03B 17/38, G03B 17/56, H04N 5/232

(54) **CONTROL DEVICE, CONTROL METHOD, PROGRAM, AND CONTROL SYSTEM**

(30) Priority: 28.07.2009 JP 2009175041
(71) Applicant: Sony Corporation, Tokyo 108-0075 (JP)
(72) Inventor: YOSHIZUMI Shingo, Tokyo 108-0075 (JP)
(74) Representative: Körber, Martin Hans
(86) International application number: PCT/JP2010/062209
(87) International publication number: WO 2011/013544

(57) **Abstract**

The present invention relates to a control device, a control method, a program, and a control system, whereby more intelligent non-conventional imaging operation more useful for a user can be realized particularly in the event of performing automatic imaging operation using a subject detection result within an imaged image, as imaging operation.

Control relating to imaging operation is performed according to a positional relation between an edge region set as an edge portion region of an image frame, and a subject detected within said image frame. Control relating to automatic imaging operation can be performed based on a non-conventional entirely new determination reference that is a positional relation between said edge region and a detected subject, and more intelligent non-conventional automatic imaging operation more useful for a user can be realized.

## Description

### Technical Field

The present invention relates to a control device which performs imaging control using a subject detection result within an imaged image by means of an imaging unit, and a method thereof, and also relates to a program that this control device executes.
Further, the present invention relates to a control system configured so as to include an imaging apparatus including an imaging unit, and a movable mechanical device configured to change the field of view by means of the imaging unit.

### Background Art

The above PTLs 1 through 4 disclose various types of techniques relating to automatic imaging operation for performing automatic recording of an imaged image by means of an imaging unit not depending on a user's release instructions.

### Citation List

### Patent Literature

PTL 1: Japanese Unexamined Patent Application Publication No. 2005-99164
PTL 2: Japanese Unexamined Patent Application Publication No. 2009-77143
PTL 3: Japanese Unexamined Patent Application Publication No. 2009-100448
PTL 4: Japanese Unexamined Patent Application Publication No. 2008-205838

### Summary of Invention

### Technical Problem

The invention in this application takes it as its theme to realize non-conventional intelligent automatic imaging operation more useful for a user particularly in the event of performing automatic imaging operation using a subject detection result within an imaged image as automatic imaging operation.

### Solution to Problem

Therefore, with the present invention, a control device is configured in the following manner.
Specifically, the control device includes a subject detecting unit configured to detect a subject from an imaged image by means of an imaging unit.
Also, the control device includes a control unit configured to perform control relating to imaging operation according to a positional relation between an edge region set to at least one side in the image frame of an imaged image by means of the imaging unit, and a subject detected within the imaged image by means of the subject detecting unit.

According to the present invention, control relating to imaging operation can be performed according to a positional relation between an edge region set as an edge portion region of an image frame, and a subject detected within the image frame.

### Advantageous Effects of Invention

According to the present invention, control relating to imaging operation can be performed based on a non-conventional entirely new determination reference that is a positional relation between an edge region set as an edge portion region of an image frame, and a subj ect detected within the image frame. Thus, non-conventional intelligent automatic imaging operation more useful for a user can be realized.

### Brief Description of Drawings

[Fig. 1] Fig. 1 is a diagram simply illustrating the external appearances of a digital still camera which is a component of an imaging control device (imaging system) serving as an embodiment, using a front view and a back view.
[Fig. 2] Fig. 2 is a perspective view illustrating an external appearance example of a camera platform which is a component of the imaging control device (imaging system) serving as an embodiment.
[Fig. 3] Fig. 3 is a front view illustrating a mode example of the imaging control device (imaging system) serving as an embodiment formed by attaching the digital still camera to the camera platform.
[Fig. 4] Fig. 4 is a plan view illustrating a mode example of the imaging control device (imaging system) serving as an embodiment formed by attaching the digital still camera to the camera platform along with a movement mode example in the pan direction.
[Fig. 5] Fig. 5 is a side view illustrating a mode example of the imaging control device (imaging system) serving as an embodiment formed by attaching the digital still camera to the camera platform along with a movement mode example in the tilt direction.
[Fig. 6] Fig. 6 is a block diagram illustrating an internal configuration example of the digital still camera.
[Fig. 7] Fig. 7 is a block diagram illustrating an internal configuration example of the camera platform.
[Fig. 8] Fig. 8 is a diagram illustrating a setting example of an edge region.
[Fig. 9] Fig. 9 is a diagram schematically illustrating a specific example of an automatic imaging control technique according to a first embodiment.
[Fig. 10] Fig. 10 is a flowchart illustrating the processing procedure of a specific example for realizing the automatic imaging control technique according to the first embodiment.
[Fig. 11] Fig. 11 is a diagram schematically illustrating a specific example of an automatic imaging control technique according to a second embodiment.
[Fig. 12] Fig. 12 is a flowchart illustrating the processing procedure of a specific example for realizing the automatic imaging control technique according to the second embodiment.
[Fig. 13] Fig. 13 is a diagram schematically illustrating a specific example of an automatic imaging control technique according to a third embodiment.
[Fig. 14] Fig. 14 is a flowchart illustrating the processing procedure of a specific example for realizing the automatic imaging control technique according to the third embodiment.
[Fig. 15] Fig. 15 is a diagram schematically illustrating a specific example of an automatic imaging control technique according to a fourth embodiment.
[Fig. 16] Fig. 16 is a flowchart illustrating the processing procedure of a specific example for realizing the automatic imaging control technique according to the fourth embodiment.
[Fig. 17] Fig. 17 is a diagram schematically illustrating a specific example of an automatic imaging control technique according to a fifth embodiment.
[Fig. 18] Fig. 18 is a flowchart illustrating the processing procedure of a specific example for realizing the automatic imaging control technique according to the fifth embodiment. Description of Embodiments

Modes for implementing the invention of this application (hereafter, referred to embodiments) will be described below in accordance with the following sequence.
1. Configuration of Imaging System
1-1. Entire System Configuration
1-2. Digital Still Camera
1-3. Camera Platform
1-4. Automatic Imaging Operation According to Automatic Composition Adjustment
2. Automatic Imaging Control Serving as First Embodiment
2-1. Behavior for Single Detected Subject
2-2. Processing Procedure
3. Automatic Imaging Control Serving as Second Embodiment
3-1. Behavior for Multiple Detected Subj ects
3-2. Processing Procedure
4. Automatic Imaging Control Serving as Third Embodiment
4-1. Behavior for Preferred Face Being Set
4-2. Processing Procedure
5. Automatic Imaging Control Serving as Fourth Embodiment
5-1. Zooming Restriction Using Edge Region
5-2. Processing Procedure
6. Automatic Imaging Control Serving as Fifth Embodiment
6-1. Self Timer Activation Control Using Edge Region
6-2. Processing Procedure
7. Modifications

Note that, with the following description, words such as "image frame", "field angle", "imaging field of view", "imaging field-of-view selection angle", and "composition" will be employed, and the definition of each word is as follows.
"Image frame" represents a region range equivalent to one screen as an image is viewed by being fitted thereinto, and commonly has a frame shape serving as a portrait or landscape rectangle.
"Field angle" will also be referred to as a zoom angle, and represents a range accommodated in an image frame determined by the position of a zoom lens in an imaging optical system using an angle. Strictly, it is said that this is determined by the focal distance of the imaging optical system, and the size of an image plane (image sensor, film), but the image plane size is fixed here, and an element changing according to focal distance will be referred to as "field angle". The value of a field angle may be represented with focal distance (e.g., 35-mm conversion) in the following.
"Imaging field of view" represents a field of view according to the imaging optical system, and is equivalent to a range to be cut off by the image frame.
"Imaging field-of-view selection angle" represents an element for determining which portion is cut off from the surrounding scenery of an imaging apparatus using an angle, which is determined here with a swing angle in the pan (horizontal) direction, and a swing angle (elevation angle, depression angle) in the tilt (vertical) angle in addition to the above field angle.
"Composition" will also be referred to as framing, which is determined with the setting of the imaging field-of-view selection angle, i.e., the settings between the pan/tilt angle and the field angle (zoom) in this case.

Now, with the present embodiment, let us say that a case will be shown as an example wherein the imaging control device according to the present invention is configured as an imaging system configured of a digital still camera, and a camera platform which detachably holds this digital still camera.

### 1. Configuration of Imaging System

### 1-1. Entire System Configuration

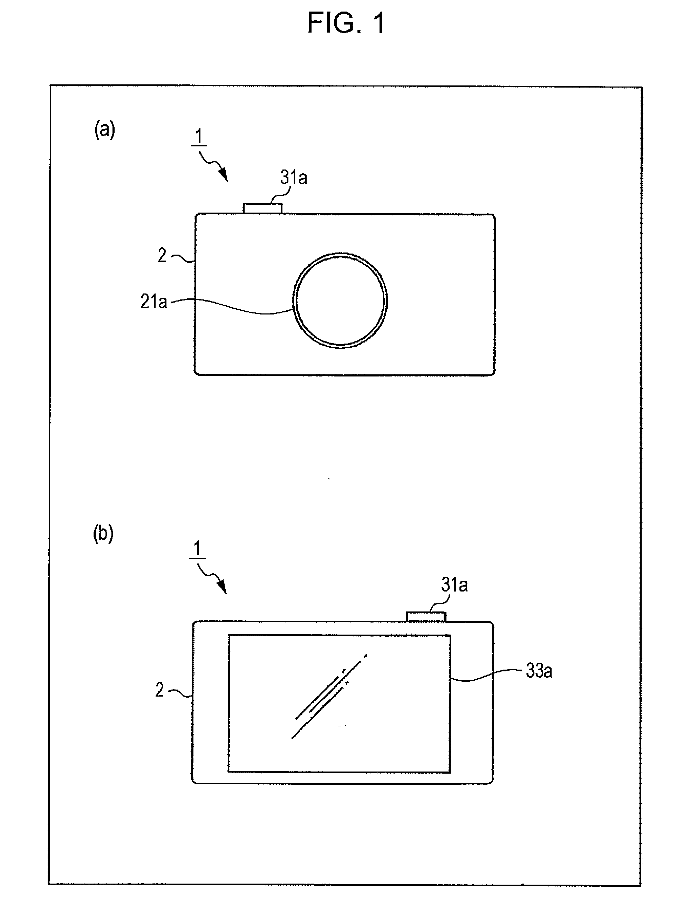

The imaging system according to an embodiment is configured of a digital still camera 1, and a camera platform 10 on which this digital still camera 1 is mounted.
First, Fig. 1 illustrates an external appearance example of the digital still camera 1. (a) in Fig. 1 and (b) in Fig. 1 are the front view and back view of the digital still camera 1, respectively.
The digital still camera 1 shown in this drawing first includes, as shown in (a) in Fig. 1, a lens unit 21a on the front face side of a main unit 2. This lens unit 21a is a unit exposed on the outer side of the main unit 2 as an optical system for imaging.

Also, a release button 31a is provided to the top face portion of the main unit 2. With an imaging mode, an image imaged by the lens unit 21a (imaged image) is generated as image signals. Upon an operation as to the release button 31a being performed in this imaging mode, the imaged image at the timing thereof is recorded in a recording medium as the image data of a still image. That is to say, photo shooting is performed.

Also, the digital still camera 1 includes, as shown in (b) in Fig. 1, a display screen unit 33a on the back side thereof.
At the imaging mode, an image, which will be referred to as a through image or the like, imaged by the lens unit 21a is displayed on this display screen unit 33a at this time. Also, at the time of a playback mode, the image data recorded in the recording medium is played and displayed. Further, an operation image serving as a GUI (Graphical User Interface) is displayed according to an operation that the user performed as to the digital still camera 1.

Now, let us say that the digital still camera 1 according to the present embodiment has been combined with a touch panel as to the display screen unit 33a. Thus, the user can perform a desired operation by touching a finger as to the display screen unit 33a.

Also, the imaging system (imaging control device) according to the present embodiment is configured of the imaging apparatus unit serving as the digital still camera 1, and a movable mechanical device serving as the camera platform 10 which will be described next, but it goes without saying that the user can perform photo shooting even using only the digital still camera 1 in the same way as a common digital still camera.

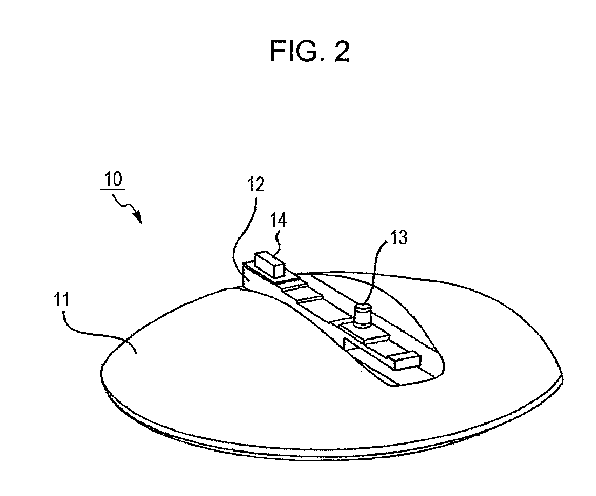

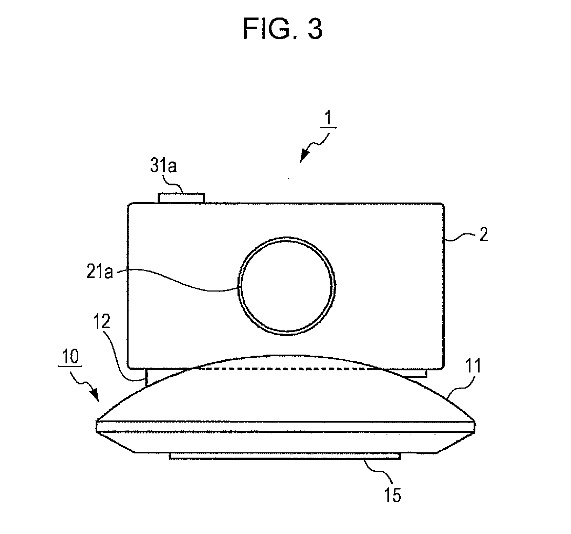

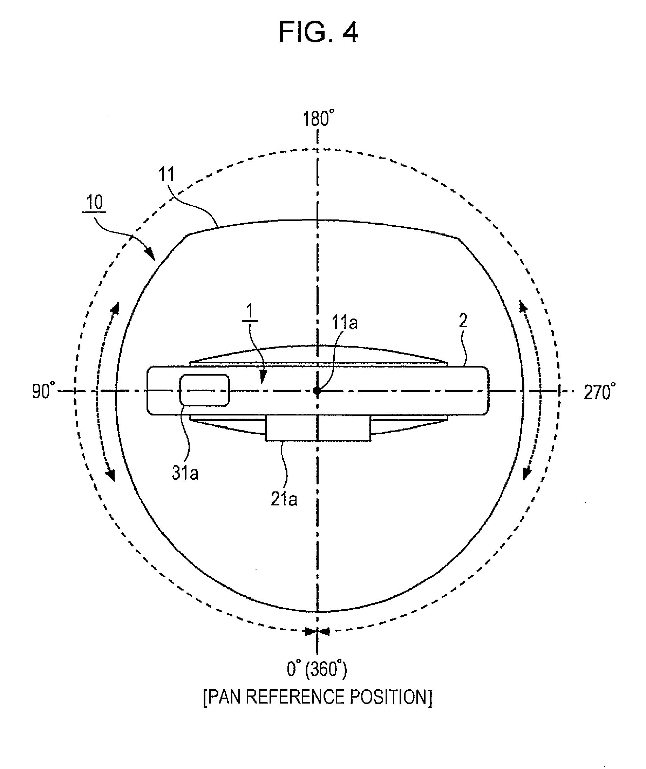

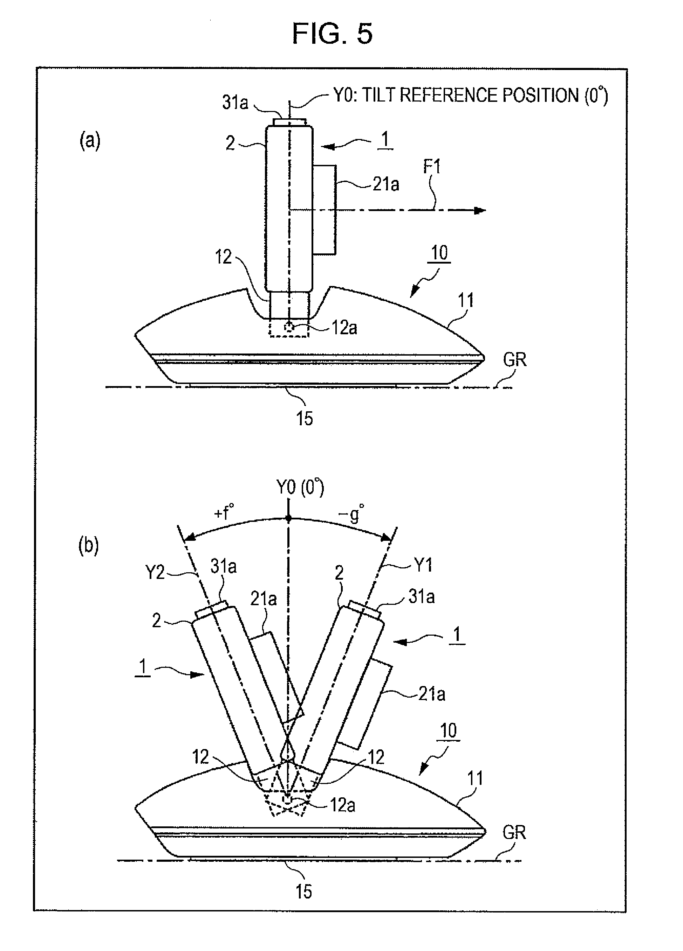

Fig. 2 is a perspective view illustrating the external appearance of the camera platform 10. Also, Fig. 3 through Fig. 5 illustrate a state in which the digital still camera 1 is mounted as to the camera platform 10 in a suitable state as the external appearance of the imaging system according to the present embodiment. Fig. 3 is a front view, Fig. 4 is a plan view, and Fig. 5 is a side view (particularly illustrates a movable range of the tilt mechanism using a side view in (b) in Fig. 5).

As shown in Fig. 2, Fig. 3, Fig. 4, and Fig. 5, the camera platform 10 has a principal configuration wherein the main unit 11 is combined onto a grounding rest 15, and then a camera stand seat portion 12 is further attached to the main unit 11.

When attempting to mount the digital still camera 1 on the camera platform 10, the bottom side of the digital still camera 1 is disposed as to the top face side of the camera stand seat portion 12.
With the top face portion of the camera stand seat portion 12 in this case, as shown in Fig. 2, a protruding portion 13 and a connector 14 are provided.
Though the drawing thereof will be omitted, with the lower face portion of the main unit 2 of the digital still camera 1, a hole portion to be engaged with the protruding portion 13 is formed. In a state in which the digital still camera 1 is adequately disposed as to the camera stand seat portion 12, this hole portion and the protruding portion 13 are in an engaged state. In this state, in the event of the common panning/tilting operation of the camera platform 10, the digital still camera 1 is configured so as to be prevented from shifting or deviating from the camera platform 10.

Also, with the digital still camera 1, a connector is provided to a predetermined position of the lower face portion thereof. In this way, in a state in which the digital still camera 1 is adequately mounted on the camera stand seat portion 12, the connector of the digital still camera 1 is connected to the connector 14 of the camera platform 10, and becomes a state in which reciprocal communication can be performed.

Note that, in reality, the connector 14 and the protruding portion 13 are configured so that the positions thereof in the camera stand seat portion 12 can be changed within a certain range, for example. Based on this, an adapter or the like of which the shape is in accordance with the shape of the bottom portion of the digital still camera 1 is used together, for example, whereby a different type of digital still camera can be mounted on the camera stand seat portion 12 in a state communicable with the camera platform 10.
Also, communication between the digital still camera 1 and the camera stand seat portion 12 may be performed without wires.

Also, for example, in a state in which the digital still camera 1 is mounted on the camera platform 10, an arrangement may be made so that charging can be performed from the camera platform 10 to the digital still camera 1. Further, an arrangement can be conceived wherein video signals such as an image or the like being played at the digital still camera 1 are also transmitted to the camera platform 10 side, and output from the camera platform 10 to an external monitor device via a cable, wireless communication, or the like. That is to say, the camera platform 10 may be used not only for changing the imaging field-of-view selection angle of the digital still camera 1 but also for serving as what we might call a cradle.

Next, basic movement in the pan/tilt direction of the digital still camera 1 by means of the camera platform 10 will be described.
First, basic movement in the pan direction is as follows.
In a state in which this camera platform 10 is disposed in the floor face or the like, the bottom of the grounding rest 15 is grounded. In this state, as shown in Fig. 4, the main unit 11 is configured so as to be rotated in the clockwise direction and counterclockwise direction with a rotation axis 11a as the rotation center. That is to say, thus, the imaging field-of-view selection angle in the horizontal direction (lateral direction) of the digital still camera 1 mounted on the camera platform 10 can be changed (so-called panning).
Note that the pan mechanism of the camera platform 10 in this case has a configuration wherein a rotation of 360° or more can freely be performed with no restriction regarding any of the clockwise direction and counterclockwise direction.

Also, with the pan mechanism of the camera platform 10, a reference position in the pan direction has been determined. Now, as shown in Fig. 4, let us say that the pan reference position is set to 0° (360°), and then the rotation position of the main unit 11 following the pan direction, i.e., the pan position (pan angle) is represented with 0° through 360°.

Also, basic movement in the tilt direction of the camera platform 10 is as follows.
The movement in the tilt direction is obtained by the camera stand seat portion 12 swinging the angle in both directions of an elevation angle and a depression angle with the rotation axis 12a as the rotation center as shown in (a) and (b) in Fig. 5.
Here, (a) in Fig. 5 illustrates a state in which the camera stand seat portion 12 is in a tilt reference position Y0 (0°). In this state, an imaging direction F1 in accordance with the imaging optical axis of the lens unit 21a (optical system unit) is in parallel with a ground face portion GR where the grounding rest 15 is grounded.
Based on this, as shown in (b) in Fig. 5, first, in the elevation angle direction, the camera stand seat portion 12 can move in a range from the tilt reference position Y0 (0°) to a predetermined maximum rotation angle +f° with the rotation axis 12a as the rotation center. Also, even in the depression angle direction, the camera stand seat portion 12 can move in a range from the tilt reference position Y0 (0°) to a predetermined maximum rotation angle -g° with the rotation axis 12a as the rotation center. In this way, the camera stand seat portion 12 moves in a range from the maximum rotation angle +f° to the maximum rotation angle -g° with the tilt reference position Y0 (0°) as the basic point, whereby the imaging field-of-view selection angle in the tilt direction (vertical direction) of the digital still camera 1 mounted on the camera platform 10 (camera stand seat portion 12) can be changed. That is to say, tilting operation is obtained.

Note that the external appearance configurations of the camera platform 10 shown in Fig. 2 through Fig. 5 are absolutely an example, as long as the mounted digital still camera 1 can be moved in the pan direction and tilt direction, another physical configuration and arrangement can be employed.

### 1-2. Digital Still Camera

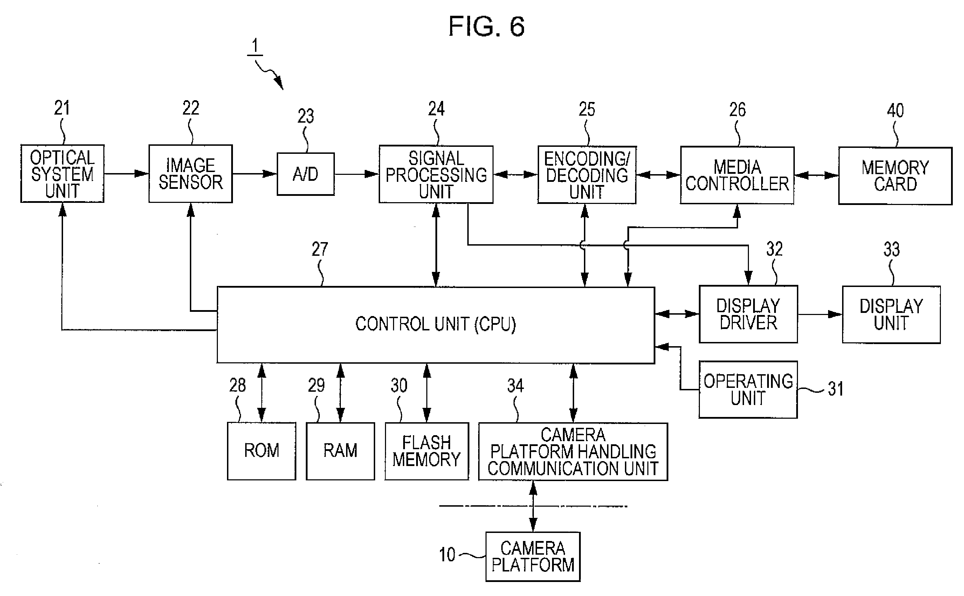

Fig. 6 is a block diagram illustrating an actual internal configuration example of the digital still camera 1.
In this Fig. 6, first, an optical system unit 21 is configured of a predetermined number of imaging lens groups and diaphragms including, for example, a zoom lens, a focus lens, and so forth, and forms an image on the light receiving face of an image sensor 22 with incident light as imaging light.
Also, the optical system unit 21 also includes driving mechanical units for driving the above-mentioned zoom lens, focus lens, diaphragm, and so forth. With these driving mechanical units, operation thereof is controlled by what we might call camera control, for example, such as zoom (field angle) control, automatic focus point adjustment control, automatic exposure control, and so forth, which the control unit 27 carries out.

The image sensor 22 performs what we might call photoelectric conversion wherein imaging light obtained at the optical system 21 is converted into electric signals. Accordingly, the image sensor 22 receives light from the optical system 21 at the light receiving face of the photoelectric conversion element, and sequentially outputs signal charge accumulated according to the intensity of received light at predetermined timings. Thus, an electric signal (imaging signal) corresponding to imaging light is output.
Note that the photoelectric conversion element (imaging device) employed as the image sensor 22 is not restricted to any particular one, but currently, a CMOS (Complementary Metal Oxide Semiconductor) sensor, a CCD (Charge Coupled Device), or the like can be employed, for example. Also, in the event of employing a CMOS sensor, the CMOS sensor can have a configuration including an analog-to-digital converter equivalent to an A/D converter 23 which will be described next, as a device (part) equivalent to the image sensor 22.

Imaging signals output from the image sensor 22 are input to the A/D converter 23, thereby being converted into digital signals and input to a signal processing unit 24.

The signal processing unit 24 is configured of a DSP (Digital Signal Processor), and subjects the digital imaging signals output from the A/D converter 23 to predetermined signal processing in accordance with a program. For example, the signal processing unit 24 performs capturing in increments equivalent to one still image (frame image) regarding the digital imaging signals output from the A/D converter 23, and subj ects the imaging signals in increments of still images captured in this way to predetermined signal processing, thereby generating imaged image data (imaged still image data) that is image signal data equivalent to one still image.

Also, in the event of the present embodiment, the signal processing unit 24 is configured so as to execute image processing serving as subject detection processing, which will be described later, using the imaged image data thus obtained, but this point will be described later again.

Now, in the event of recording the imaged image data generated at the signal processing unit 24 in the way described above in a memory card 40 which is a recording medium, as image information, the imaged image data corresponding to one still image is output from the signal processing unit 24 to the encoding/decoding unit 25, for example.
An encoding/decoding unit 25 executes compression encoding using a predetermined still image compression encoding system regarding the imaged image data in increments of still images output from the signal processing unit 24, and then adds a header and so forth according to the control of a control unit 27, for example, and converts into an image data format compressed in a predetermined format. The image data thus generated is transferred to the media controller 26. A media controller 26 writes and records the transferred image data as to the memory card 40 in accordance with the control of the control unit 27. The memory card 40 in this case is a recording medium having a configuration having an outer shape in a card format in accordance with a predetermined standard, for example, and internally including a nonvolatile semiconductor storage element such as flash memory or the like. Note that the recording medium which records image data may have a type, format, and so forth other than the above-mentioned memory card.

Also, the digital still camera 1 executes image display as to a display unit 33 using the imaged image data obtained at the signal processing unit 24, whereby what we might call a through image which is an image being imaged now can be displayed. For example, the signal processing unit 24 captures imaged signals output from the A/D converter 23 in the way described above to generate imaged image data equivalent to one still image, but continues this operation, thereby sequentially generating imaged image data equivalent to frame images in a moving image. The signal processing unit 24 transfers the imaged image data thus sequentially generated to a display driver 32 in accordance with the control of the control unit 27. Thus, display of through images is performed.

The display driver 32 generates a driving signal for driving the display unit 33 based on the imaged image data input from the signal processing unit 24 in the way described above, and outputs to the display unit 33. Thus, images based on the imaged image data in increments of still images are sequentially displayed at the display unit 33. If the user views this, an image imaged at that time is displayed at the display unit 33 in a moving image manner. That is to say, a through image is displayed.

Also, the digital still camera 1 may play the image data recorded in the memory card 40, and display the image thereof on the display unit 33.
In order to realize this, image data may be specified, and the media controller 26 may be instructed to read out the data from the memory card 40. In response to the instructions, the media controller 26 accesses the address on the memory card 40 in which the specified image data is recorded to execute readout of the data, and transfers the read data to the encoding/decoding unit 25.

The encoding/decoding unit 25 extracts entity data serving as compressed still image data from the imaging image data transferred from the media controller 26, for example, in accordance with the control of the control unit 27, executes decoding processing corresponding to compression encoding regarding this compressed still image data, obtains imaged image data corresponding to one still image, and then transfers this imaged image data to the display driver 32. Thus, the image of the imaged image data recorded in the memory card 40 is played and displayed at the display unit 33.

Also, a user interface image (operation image) can be displayed on the display unit 33 along with the above-mentioned through image, the played image of image data, or the like. In this case, for example, the control unit 27 generates display image data serving as a necessary user interface image in accordance with an operation state at this time, and outputs this to the display driver 32. Thus, the user interface image is displayed at the display unit 33. Note that this user interface image may also be displayed on the display screen of the display unit 33 separately from a monitor image, and the played image of imaged image data such as a specific menu screen or the like, or may also be displayed so as to be superimposed or synthesized on a portion of a monitor image the played image of imaged image data.

The control unit 27 is configured of a CPU (Central Processing Unit), and makes up a microcomputer along with ROM 28 and RAM 29. With the ROM 28, for example, in addition to a program that the CPU serving as the control unit 27 should execute, various types of setting information relating to the operation of the digital still camera 1 and so forth are stored. The RAM 29 serves as a main storage device for the CPU. Also, flash memory 30 in this case is provided as a nonvolatile storage region used for storing various types of setting information and so forth necessary for change (rewriting) according to the user's operations or operation history or the like, for example. Note that, with regard to the ROM 28, for example, in the event of employing nonvolatile memory including flash memory or the like, a partial storage region in this ROM 28 may be used instead of the flash memory 30.

Here, in the event of the present embodiment, the control unit 27 performs control and processing for realizing subject search for executing subject detection by the signal processing unit 24 while changing an imaging field of view to search a subject around the digital still camera 1, optimal composition determination for determining a composition determined to be optimal according to the mode of a subject detected accompanied with this subject search in accordance with a predetermined algorithm, composition adjustment with the composition determined to be optimal obtained by this optimal composition determination as a target composition, and automatic recording of an imaged image after this composition adjustment, but these will be described later.

An operating unit 31 collectively indicates various types of operators provided to the digital still camera 1, an operation information signal output unit to be output to the control unit 27 by generating operation information signals according to operations performed on these operators. The control unit 27 executes predetermined processing according to the operation information signal input from the operating unit 31. Thus, the operation of the digital still camera 1 according to the user's operations is executed.

A camera platform handling communication unit 34 is a unit for executing communication in accordance with a predetermined communication method between the camera platform 10 side and the digital still camera 1 side, and is configured of, for example, a physical layer configuration whereby transmission/reception of communication signals can be performed with the communication unit on the camera platform 10 side with a cable or without a cable in a state in which the digital still camera 1 is attached to the camera platform 10, and a configuration for realizing communication processing corresponding to a predetermined layer serving as an upper layer than the physical configuration layer. With correspondence as to Fig. 2, a connector unit to be connected to a connector 14 is included as the physical layer configuration.

### 1-3. Camera Platform

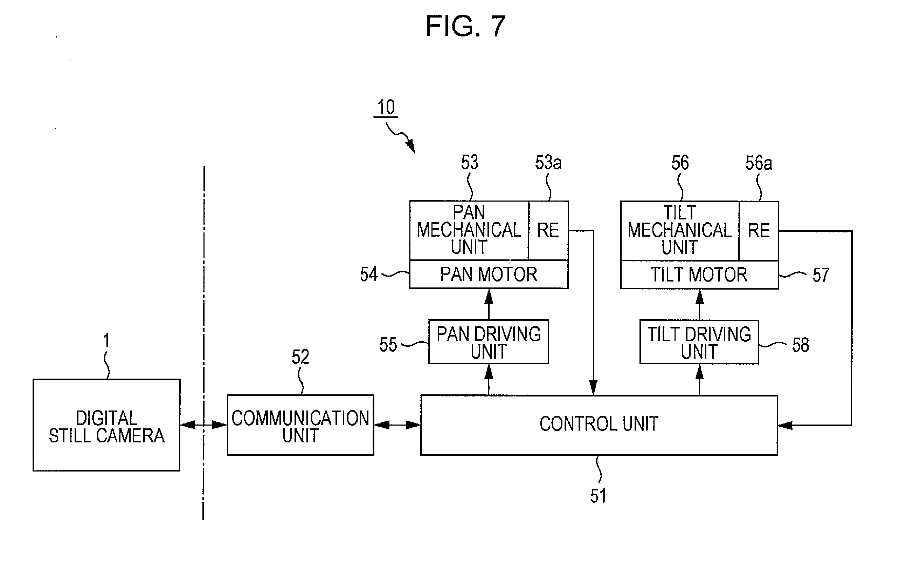

The block diagram in Fig. 7 illustrates an internal configuration example of the camera platform 10.
As described above, the camera platform 10 includes pan and tilt mechanisms, and includes as units corresponding thereto a pan mechanical unit 53, a pan motor 54, a tilt mechanical unit 56, and a tilt motor 57.
The pan mechanical unit 53 is configured of a mechanism for providing movement in the pan (horizontal, lateral) direction shown in Fig. 4 regarding the digital still camera 1 attached to the camera platform 10, and the movement of this mechanism can be obtained by the pan motor 54 rotating in the forward/backward direction. Similarly, the tilt mechanical unit 56 is configured of a mechanism for providing movement in the tilt (vertical, longitudinal) direction shown in Fig. 5 regarding the digital still camera 1 attached to the camera platform 10, and the movement of this mechanism can be obtained by the tilt motor 57 rotating in the forward/backward direction.

A control unit 51 is configured of, for example, a microcomputer formed by the CPU, ROM, RAM, and so forth being combined, and controls the movement of the pan mechanical unit 53 and tilt mechanical unit 56. For example, when the control unit 51 controls the movement of the pan mechanical unit 53, the control unit 51 outputs signals for specifying a direction in which to be moved and movement speed to a pan driving unit 55. The pan driving unit 55 generates a motor driving signal corresponding to an input signal, and outputs to the pan motor 54. This motor driving signal is a pulse signal corresponding to PWM control if the motor is a stepping motor for example.
According to this motor driving signal, the pan motor 54 rotates according to a predetermined rotational direction and rotational speed, for example, and as a result thereof, the pan mechanical unit 53 is also driven so as to be moved according to the movement direction and movement speed corresponding to thereto.
Similarly, when controlling the movement of the tilt mechanical unit 56, the control unit 51 outputs signals for specifying the movement direction and movement speed necessary for the tilt mechanical unit 56 to a tilt driving unit 58. The tilt driving unit 58 generates a motor driving signal corresponding to an input signal, and outputs to the tilt motor 57. According to this motor driving signal, the tilt motor 57 rotates according to a predetermined rotational direction and rotational speed, for example, and as a result thereof, the tilt mechanical unit 56 is also driven so as to be moved according to the movement direction and speed corresponding to thereto.

Also, the pan mechanical unit 53 includes a rotary encoder (rotation detector) 53a. The rotary encoder 53a outputs, according to the rotational movement of the pan mechanical unit 53, a detection signal indicating the rotational angle amount thereof to the control unit 51. Similarly, the tilt mechanical unit 56 includes a rotary encoder 56a. This rotary encoder 56a also outputs, according to the rotational movement of the tilt mechanical unit 56, a signal indicating the rotational angle amount thereof to the control unit 51.

A communication unit 52 is a unit for executing communication in accordance with a predetermined communication method as to the camera platform handling communication unit 34 within the digital still camera 1 attached to the camera platform 10, and is configured of, in the same way as the camera platform handling communication unit 34, a physical layer configuration whereby transmission/reception of communication signals can be performed with the communication unit on the communication partner side with a cable or without a cable, and a configuration for realizing communication processing corresponding to a predetermined layer serving as an upper layer than the physical configuration layer. With correspondence as to Fig. 2, the connector 14 of the camera stand seat portion 12 is included as the physical layer configuration.

### 1-4. Automatic Imaging Operation According to Automatic Composition Adjustment

Now, the imaging system according to the present embodiment performs automatic composition adjustment operation with the composition determined to be optimal according to the mode of a subj ect detected accompanied with the subj ect search as a target composition, according to the operations of the above-mentioned subject search, optimal composition determination, and composition adjustment.
Description will be made below regarding a specific example of automatic imaging operation serving as the present embodiment accompanied with such automatic composition adjustment operation.

First, at the time of performing such automatic composition adjustment, the subject detection result according to the signal processing unit 24 shown in Fig. 6 is used.
The signal processing unit 24 executes the following processing as subject detection processing.
Specifically, the signal processing unit 24 detects an image portion equivalent to a person's face from image signal data equivalent to one still image obtained in the way described above. Specifically, with the subject detection processing according to the present example case, what we might call a face detection technique is used, and for each subj ect detected within the image a face frame is set corresponding to the region of an image portion of the face thereof. Based on this, information of the number of subj ects within an image frame, and the size and position within each image frame of each subject is obtained from information of the number, sizes, and positions of the face frames.
Note that, with regard to face detection techniques, some have been known, but with the present embodiment, what kind of detection technique is employed has not to be restricted to a particular technique, and a method determined to be suitable as appropriate by considering detection precision and a design difficulty level should be employed.
Also, the signal processing unit 24 executes the subject detection processing as described above in increments of a predetermined number of frames such as for each image signal data equivalent to one still image (i.e., for each frame) or the like.

At the time of performing automatic composition adjustment, first, search for a subj ect exists around the digital still camera 1 is performed using the detection information according to such subject detection processing.
Specifically, as this subject search, the control unit 27 in the digital still camera 1 performs pan and tilt control as to the camera platform 10, or zoom control as to the optical system unit 21, thereby executing subject detection according to the signal processing unit 24 while changing the imaging field-of-view selection angle. Such subject search processing is ended in response to a state in which a subject is detected within an image frame by the subject detection processing according to the signal processing unit 24 being obtained.

After the subj ect search processing is completed, the control unit 27 performs determination of an image structure (determination of the number of subj ects, subj ect size, and subject position in the image frame in this case) based on the subject detection results according to the signal processing unit 24, and then executes optimal composition determination processing. Specifically, as this optimal composition determination processing, based on the information of an image structure determined according to the image structure determination, a composition determined to be optimal is determined in accordance with a predetermined algorithm. Here, as can also be understood from the above description, the composition in this case is determined according to the imaging field-of-view selection angles of pan, tilt, and zoom, and accordingly, depending on this optimal composition determination processing, as a determination result thereof, the information of the imaging field-of-view selection angles of pan, tilt, and zoom determined to be optimal according to the subject detection results (the mode of a subject within an image frame) is obtained.

After execution of such optimal composition determination processing, the control unit 27 performs composition adjustment control, i.e., pan, tilt, and zoom control with the optimal composition as a target composition.
Specifically, the control unit 27 instructs the control unit 51 on the camera platform 10 side the information of the imaging field-of-view selection angles of pan and tilt obtained by the optimal composition determination processing as this composition adjustment control.
In response to this, the control unit 51 obtains movement amount regarding the pan mechanical unit 53 and tilt mechanical unit 56 for directing the digital still camera 1 to the imaging direction where the imaging field-of-view selection angles of the specified pan and tilt are obtained, and performs supply of a pan control signal as to the pan motor 54, and supply of a tilt control signal as to the tilt motor 57 so as to perform the pan driving and tilt driving according to the obtained movement amount.
Also, the control unit 27 instructs the optical system unit 21 the information of the imaging field-of-view selection angle (i.e., information of a field of angle) regarding zoom obtained by the optimal composition determination processing, thereby executing zoom operation according to the optical system unit 21 so as to obtain the specified field of angle.

In the event that the composition adjustment operation based on the composition adjustment control has been completed, and the composition determined to be optimal has been obtained, the control unit 27 performs control as to the encoding/decoding unit 25 and media controller 26 to execute recording of imaged image data to the memory card 40.

As described above, with the imaging system according to the present embodiment, based on the control and processing by the control unit 27, automatic imaging operation according to automatic composition adjustment is realized.

### 2. Automatic Imaging Control Serving as First Embodiment

### 2-1. Behavior for Single Detected Subject

Now, as the imaging system for performing automatic imaging operation according to automatic composition adjustment as described above, with a system for driving the mechanisms as with the present example case to perform composition adjustment, a suitable time lag occurs from start of the composition adjustment control to obtaining of the target composition. From this point of view, between start of the composition adjustment control, and obtaining of the target composition, a detected subject may be lost (disappear) from an image frame such as a subject detected within an image frame moving outside the image frame at the time of the optimal composition determination, or even though not moving, the direction of the subject may change, and face detection cannot be performed.

In response to a subj ect being lost from the image frame under composition adjustment in this way, it can normally be conceived to perform subject search again.
In reality, the present applicant has employed so far a technique for performing subject search again regarding the imaging system being developed now.

However, as results of repeated experiments, it has been found that such a conventional technique includes the following problems.
Specifically, when considering a case where re-search is executed according to a subject being lost due to moving out of an image frame (i.e., out-of-frame) as described above, the subject search processing is performed wherein the pan and tilt angles are swung in a predetermined direction and sequence to search a subject, and accordingly, a case may occur wherein the direction where a subject has actually moved, and the direction where the pan and tilt angles are swung at the time of search do not match. Specifically, re-search may be performed in a direction different from the direction where the subject was out-of-frame.
Alternatively, as a case where a subject has been lost within an image frame, in reality, there are many cases where a subject simply looks down or turns round back, and after a short while, changes the direction to the front. That is to say, if based on this, in the event of employing the above-mentioned conventional technique, in spite of a subj ect frequently changing the direction to the front, in response to a subject being lost, immediately re-search is performed, and consequently, although there is a case where imaging and recording can be performed with the optimal composition (i.e., photo opportunity), the opportunity thereof will be missed.

In the event of employing the conventional technique wherein in response to a subject being lost from the inside of an image frame during composition adjustment, a subject is researched in this way, intelligence as the imaging system is extremely lacked, and consequently, usefulness for a user deteriorates.

Therefore, with the present embodiment, in the event that a subject has been lost from the inside of an image frame during composition adjustment to the optimal composition, a technique is employed wherein a subject is tracked according to the lost mode thereof, or standby for a certain period is carried out.
First, with the first embodiment, description will be made regarding the behavior in the case that the number of detected subjects is single.

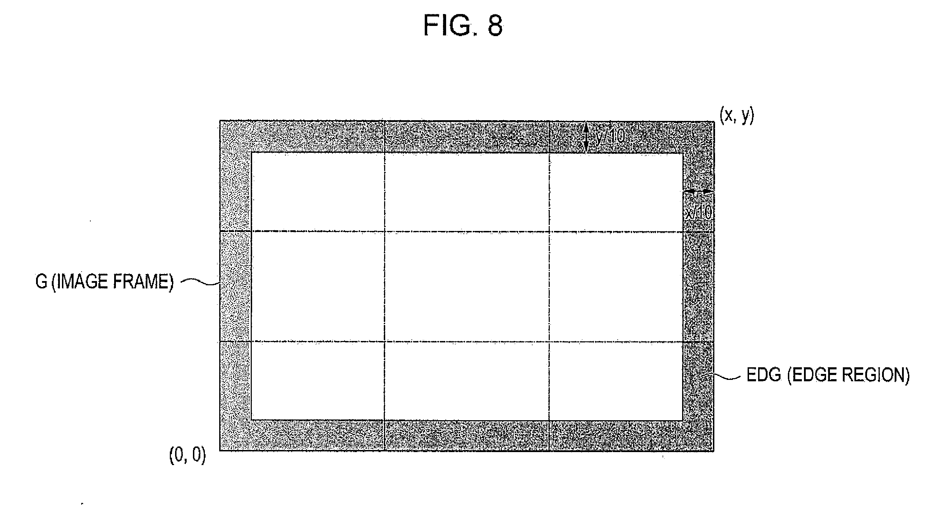

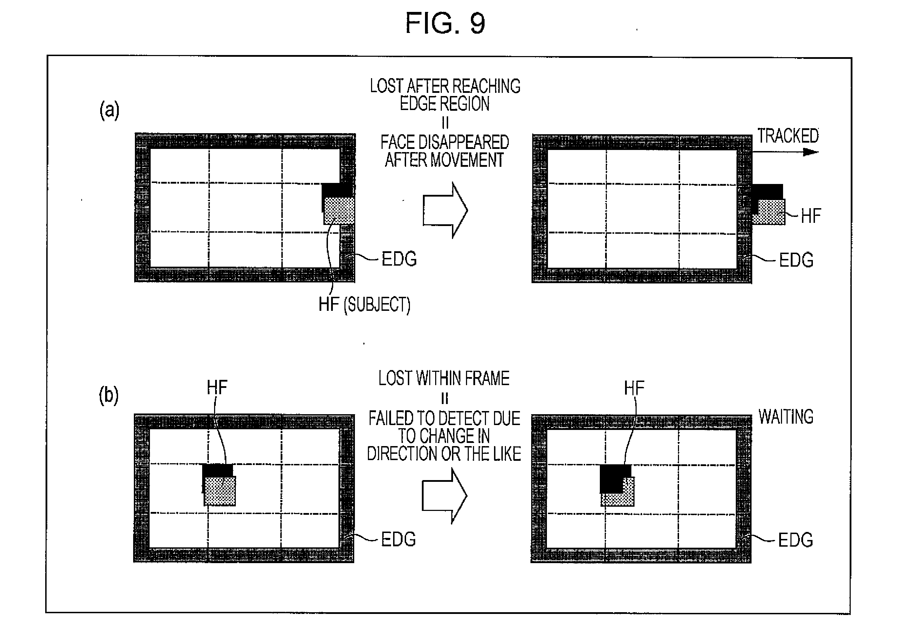

Fig. 8 and Fig. 9 are diagrams for describing an automatic imaging control technique serving as the first embodiment, Fig. 8 illustrates an example of an edge region to be set to an image frame, and Fig. 9 schematically illustrates a specific example of the automatic imaging control technique according to the first embodiment.

First, as shown in Fig. 8, in the case of the present embodiment, an edge region EDG is set so as to correspond to the edge portion of an image frame G of an imaged image imaged and obtained by the optical system unit 21 shown in Fig. 6.
In the case of the present example, this edge region EDG is set so as to include all of the edge regions of the four sides of the image frame G Specifically, with the edge region EDG in this case, the widths of regions positioned in both edge portions in the lateral direction of the image frame G are each set to x / 10, and the widths of regions positioned in both edge portions in the longitudinal direction of the image frame G are each set to y / 10.
Here, as can also be clear from the drawing, the above-mentioned x represents the number of valid pixels in the lateral direction (horizontal direction) of the imaged image, and the above-mentioned y represents the number of valid pixels in the longitudinal direction (vertical direction) of the imaged image.

With the first embodiment, control operation as shown in Fig. 9 is performed using the edge region EDG thus set within the image frame G.
First, (a) in Fig. 9 illustrates behavior in the case that a subject has been lost after reaching the edge region EDG during composition adjustment.
Note that, with the following description, a subject detected within the image frame G will be represented with a subject HF.

As shown in (a) in Fig. 9, a case where the subject HF has been lost after reaching the edge region EDG can be regarded as a case where this subject HF has moved, and the face has disappeared. Also, at this time, the movement direction (direction where out-of-frame occurs) of the subject HF can be known by the position within the edge region EDG where this subject HF has reached immediately before being lost. Specifically, in the event that the subject HF has reached the region of the right edge portion in the edge region EDG as shown in the example in (a) in Fig. 9, the subject HF can be assumed that the subject HF has moved in the right direction and has been out-of-frame.

Here, if we say that the edge region EDG is made up of four regions corresponding to the four sides of an image frame G respectively, the out-of-frame direction of the subj ect HF can be assumed by determining the edge region where the subject HF has reached immediately before being lost out of these four edge regions.

In this way, in the event that the cause of the subject HF being lost is determined to be out-of-frame using the edge region ERG, control of the imaging field-of-view selection angle is performed so as to track (follow) the subject HF being out-of-frame. Specifically, with the example in (a) in Fig. 9, the subject HF can be assumed to have moved in the right direction, and accordingly, in this case, control is performed so as to perform pan driving in the right direction for a certain period, thereby tracking the subject HF being out-of-frame.
With the present example, let us say that as the above-mentioned "a certain period" tracking for three seconds is performed, for example.

On the other hand, (b) in Fig. 9 illustrates behavior in the event that of the subject HF being lost occurs within a region on the inner side than the edge region EDG
At the time of a subj ect HF being lost, if this subj ect HF has not reached the edge region EDG before disappearance thereof, it can be regarded that the subject HF thereof has been lost within a region on the inner side than the edge region EDG (hereafter, also referred to as being lost in-frame). A case where being lost in-frame has occurred can be regarded as a case where the subject HF cannot be detected due to a cause such as the direction of the subject HF (face) having changed, or the like, and accordingly, in response to this, standby for a certain period is carried out. That is to say, in the event that the subject HF cannot be detected due to a cause such as the direction of the subject HF having changed, or the like, standby for a certain period is carried out expecting that the subject HF will change the direction to the front after a short while.
In the case of the present example, with regard to such standby as well, three seconds are set as the period thereof.

Here, though drawing is omitted in Fig. 9, after tracking for a certain period shown in (a) in Fig. 9, or standby for a certain period shown in (b) in Fig. 9, processing for confirming whether or not the subj ect HF serving as the target has been detected again is performed. Specifically, the control unit 27 obtains the subject detection result information from the signal processing unit 24 after performing tracking for a certain period, or standby for a certain period, and based on the contents of the information thereof, performs determination regarding whether or not the subject HF has been detected again.

In the event that this determination is made that the subject HF has been detected again, composition adjustment control is executed with the composition determined to be optimal by this optimal composition determination as the target composition after performing the above-mentioned optimal composition determination.
On the other hand, in the event that the determination is made that the subject HF has not been detected again, control is performed so as to execute subj ect search. That is to say, in this s case, the subject HF serving as the object is determined to have been lost, and the processing will be performed again from subject search.

The automatic imaging control serving as the first embodiment described above is performed, whereby even if the subject HF, determined to be the object by the original optimal composition determination before the subject being lost, has been lost during composition adjustment, re-search of a subject can be prevented from being performed immediately in response thereto.
Specifically, in the event that the subject HF has been lost due to being out-of-frame, tracking in the out-of-frame direction is performed, whereby more rapid redetection of the subject HF serving as the target can be realized without performing subj ect search again.
Also, in the event that the subject HF has become lost within the frame, more rapid redetection of the subject HF serving as the target can be realized without performing subject search again, by standing by for a predetermined amount of time.

According to a control technique serving as the first embodiment, an imaging system realized so as to perform many more imaging and recordings can be realized without missing an imaging and recording opportunity as compared to a conventional technique for immediately entering subject search in response to the subject becoming lost during composition adjustment. That is to say, from this point of view, according to the present embodiment, more intelligent automatic imaging operation than a case where a conventional technique is employed can be performed, and consequently, an imaging system having more usefulness for a user can be provided.

Incidentally, with the present embodiment, the out-of-frame direction of the subject HF is detected (determined) by determining which region of the edge region EDG the subj ect HF that has regarding out-of-frame has occurred has reached before being lost, but determination of the out-of-frame direction of the subject HF can be realized by very simple processing by using such a technique.

Here, examples of a technique for detecting the out-of-frame direction include a technique wherein movement direction thereof is estimated from transition of a detected position before of the subject HF being lost, and this estimated direction is taken as the out-of-frame direction.
However, adjustment of the imaging field-of-view selection angles of pan, tilt, zoom, and so forth is performed during composition adjustment, and accordingly, it is very difficult to distinguish whether change in the position of the subject HF obtained from the subject detection information is accompanied with movement of the subject HF itself, or accompanied with adjustment of pan, tilt, and zoom, and consequently, there is a high possibility that determination of the movement direction of the subject HF will be missed.
Alternatively, it can also be conceived to employ movement direction estimation processing wherein calculation processing for canceling the position change worth of the subject HF accompanied with movement of pan, tilt, and zoom for composition adjustment is added to improve the determination precision of the movement direction of the subj ect HF, but this case leads to increase in processing burden.

On the other hand, according to the technique of the present embodiment described above, the movement direction at the time of the subject HF being out-of-frame can accurately be determined with very simple processing for determining which region of the edge region EDG this subject HF has reached disappearing.

### 2-2. Processing Procedure

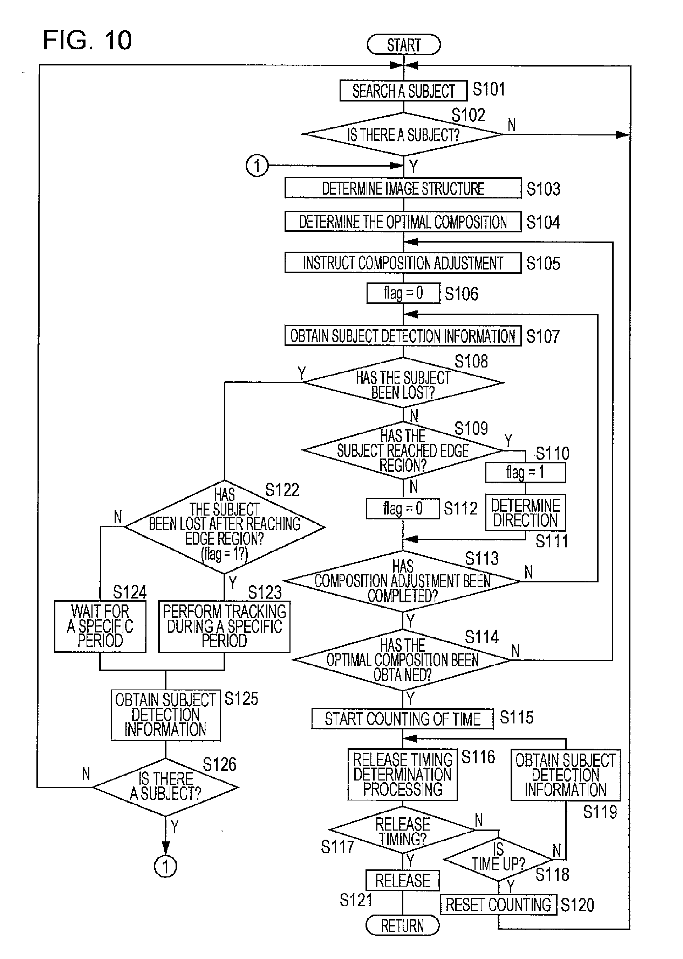

The flowchart in Fig. 10 illustrates a specific processing procedure to be performed for realizing the automatic imaging control technique serving as the first embodiment described above.
Note that Fig. 10 illustrates the processing procedure to be performed for realizing the automatic imaging control technique serving as the first embodiment as a processing procedure that the control unit 27 shown in Fig. 6 executes, for example, in accordance with the program stored in the ROM 28.

First, in step S101, subject search processing is performed. Specifically, pan/tilt instructions are given as to the control unit 51 on the camera platform 10 side or zoom control as to the optical system unit 21 as processing for searching a subject around the digital still camera 1, thereby executing the subject detection according to the signal processing unit 24 while changing the imaging field-of-view selection angle.

In the next step S102, determination is made regarding whether or not a subj ect has been detected. Specifically, determination is made regarding whether or not the subject HF has been detected within the image frame G according to the subject detection processing by the signal processing unit 24.
In the event that a negative result has been obtained in step S102 that not subj ect has been detected, the flow returns to step S101 to execute the subj ect search processing again.

On the other hand, in the event that a positive result has been obtained in the above step S102 that a subj ect has been detected, the flow proceeds to step S103 to execute image structure determination processing. Specifically, determination is made regarding an image structure where the subject HF (person) is taken as a subject element, such as the number, position, size of detected subj ect HF within the image frame G, based on the subj ect detection information obtained from the signal processing unit 24.

In the next step S104, determination is made regarding a composition determined to be optimal in accordance with a predetermined algorithm based on the information of the image structure determined in the processing in the above step S102, as optimal composition determining processing. That is to say, determination is made regarding the information of the imaging field-of-view selection angles of pan, tilt, and zoom determined to be optimal.

In the next step S105, composition adjustment instructions are given. Specifically, instructions are given regarding pan and tilt angles as to the control unit 51 on the camera platform 10 side, and instructions of a zoom angle as to the optical system unit 21 so as to obtain the imaging field-of-view selection angles of pan, tilt, and zoom determined to be optimal obtained in the above step S104.

With a period from composition adjustment instructions in the above step S105 being performed (i.e., from the composition adjustment control being started) to completion of the composition adjustment, according to processing in steps S106 through S113, and processing in steps S120 through S126 in the drawing, processing for determining whether there is a lost subject HF, or for determining a lost mode, or in the event that being lost has occurred, processing for tracking/standby according to the lost mode is performed.

First, in step S106, processing is executed for setting flag = 0. Here, this flag serves as an identifier for identifying whether the subject HF has been lost due to being out-of-frame, or has become lost in-frame.

In the next step S107, the subject detection information is obtained from the signal processing unit 24 as subject detection information obtaining processing.

In the next step S108, determination is made regarding whether or not the subj ect HF has been lost, based on the subject detection information thus obtained.
In the event that a negative result has been obtained in step S108 that the subj ect HF has not been lost, the flow proceeds to step S109, and determination is made regarding whether or not the subject HF has reached the edge region EDG Specifically, determination is made regarding whether or not the position within the image frame G of the subject HF determined from the subj ect detection information obtained in the above step S107 has reached the predetermined edge region EDG

In the event that a positive result has been obtained in the above step S109 that the subj ect HF has reached the edge region, the flow proceeds to step S110 to execute processing for updating to set flag = 1.
Based on this, in the next step S111, direction determination processing is executed. Specifically, the direction information is obtained of the right or left from a result of determination regarding whether or not the subject HF has reached at least one of the regions of the left side and right side of the edge region EDG to obtain information representing the out-of-frame direction of the subject HF necessary for performing tracking processing according to later-described step S123.
After execution of the processing in step S111, the flow advances to step S113.

On the other hand, in the event that a negative result has been obtained in the above step S109 that the subj ect HF has not reached the edge region ERG, flow proceeds to step S112, sets flag = 0, and then proceeds to processing in step S113.

In step S113, determination is made regarding whether or not the composition adjustment has been completed. Specifically, determination is made regarding whether or not the settings of the imaging field-of-view selection angles of pan, tilt, and zoom specified in step S105 have been completed.

In the event that a negative result has been obtained in step S113 that the setting of each of the imaging field-of-view selection angles of pan, tilt, and zoom specified in step S105 has not been completed, and accordingly, the composition adjustment has not been completed, the flow returns to step S107 as shown in the drawing. That is to say, thus, until the composition adjustment is completed, processing of obtaining of subject detection information (S107), determination regarding whether there is a subj ect that has become lost (S108), confirmation of a positional relation between the subject HF and the edge region EDG (S109), flag updating according to a positional relation between the subj ect HF and the edge region EDG or direction determination in the case of flag = 1 (S110, S112, S111) is repeatedly performed with a predetermined cycle.

On the other hand, in the event that a positive result has been obtained in the above step S113 that the composition adjustment has been completed, the flow proceeds to step S114, and determination is made regarding whether or not the desired composition has been obtained. Specifically, determination is made regarding whether or not the currently obtained composition (in this case, the composition determined from the subject detection information obtained in step S107) is in a state regarded as the same composition determined in the previous step S104 (e.g., a state in which a certain degree or more of approximation is obtained).

In the event that a negative result has been obtained in step S114 that the composition is not satisfied, the flow returns to step S105 as shown in the drawing, and performs composition adjustment instructions.

Also, in the event that a positive result has been obtained in the above step S114 that the composition is satisfied, final processing is performed for release using processing in steps S115 through S121.
Now, with the automatic imaging operation of the present example, let us say that release is performed with a final condition wherein the subj ect HF is in a predetermined particular state (e.g., a smiling face) without immediately performing release in response to the composition being satisfied.

### First, in step S115 counting of time starts.

In the next step S116, processing is executed for determining whether or not the state of a detected subj ect is agreement with a predetermined particular state, as release timing determination processing. For example, in the event that a smiling face is taken as a final condition as described above, the processing in this step S116 becomes processing for determining whether or not the state of the subject HF determined from the subject detection information obtained in step S107 is in agreement with a state serving as a smiling face.

In the next step S117, determination is made regarding whether or not the timing is suitable, based on the result of the determination processing in the above step S116. Specifically, in the event that the result of the determination processing in the above step S116 represents that the state of a detected subject is in agreement with a predetermined particular state, a positive result is obtained that the timing is suitable. Also, in the event that the result of the determination processing in the above step S116 represents that the state of a detected subj ect is not in agreement with a predetermined particular state, a negative result is obtained that the timing is unsuitable.

In the event that a negative result has been obtained in the above step S117 that the timing is unsuitable, the flow proceeds to step S118, and determination is made regarding whether or not the time is up. Specifically, determination is made regarding whether or not the value of counting of time started in step S115 has reached a predetermined certain value.

In the event that a negative result has been obtained in the above step S118 that the timing is not up, the flow proceeds to step S119 to execute obtaining processing of subj ect detection information, and then returns to step S116.
Loop processing of steps S116→S117→S118→S119 is thus formed, and the flow waits for occurrence of either a state in which the release timing is suitable or a state in which the time is up using this loop processing.

In the event that a positive result has been obtained in the above step S118 that the time is up, in step S120 counting of time is reset, and then the flow returns to step S101. That is to say, in the event that the final condition is unsatisfied and the time is up, subject search is performed again.

Also, in the event that a positive result has been obtained in the above step S117 that the timing is suitable, the flow proceeds to step S121 to perform release processing. Specifically, the encoding/decoding unit 25 and media controller 26 are controlled to execute recording of imaged image data in the memory card 40.

Here, the processing flow described so far is based on a case where the subject HF has not been lost during composition adjustment.
In the event that the subject HF has been lost during composition adjustment, processing which will be described below will be executed.

In the event that a positive result has been obtained in the above step S108 that the subj ect HF has been lost, the flow advances to step S122.
In step S122, determination is made regarding whether or not the lost subject HF has been lost after reaching the edge region EDG Specifically, determination is made regarding whether or not flag = 1 is set.

In the event that a positive result has been obtained in step S122 that flag = 1 is satisfied, and the subject HF has been lost after reaching the edge region ERG, the flow proceeds to step S123 to execute processing for tracking (following) for a certain period. Specifically, instructions are given as to the control unit 51 on the camera platform 10 side so that pan driving is performed for a certain period in a direction in accordance with the direction determined by the direction determination processing in the previous step S111. Note that, as described above, the tracking period of the subj ect HF in this case is set to three seconds.

On the other hand, in the event that a negative result has been obtained in the above step S122 that flag = 1 is unsatisfied (i.e., flag = 0), the flow proceeds to step S124 to execute processing for standby for a certain period. Note that, in this case, the standby period is also three seconds.

After executing the processing in the above step S123 or the above step S124, in step S125 subj ect detection information obtaining processing is executed, and then in step S126 determination is made regarding whether or not the subject HF has been detected.

In the event that a positive result has been obtained in the above step S126 that the subject HF has been detected, the flow returns to step S103. Specifically, in the event that after tracking for a certain period, or standby for a certain period, the lost subj ect HF has been redetected, the optimal composition determination with the redetected subject HF as the object is performed, and composition adjustment is executed again.

On the other hand, in the event that a negative result has been obtained in the above step S126 that no subj ect has been detected, the flow returns to step S101, and performs the processing again from subject search.

Here, with the present example, a case where conditions other than that the composition is suitable (steps S115 through S120) are imposed as conditions for release has been shown as an example, but it goes without saying that release may be performed immediately in response to that the composition is suitable without imposing such separate conditions.

### 3. Automatic Imaging Control Serving as Second Embodiment

### 3-1. Behavior for Multiple Detected Subjects

With the first embodiment, description has been made on the premise of the number of subjects HF detected within the image frame G being single.
With the second embodiment, description will be made regarding operation to be performed in response to a case where the number of subjects HF detected within the image frame G is greater than one.
Note that, with the embodiments including the second embodiment which will be described below, the configuration of the imaging system (digital still camera 1 and camera platform 10) is the same as that described in previous Fig. 1 through Fig. 7, and accordingly, redundant description with reference to drawings will be omitted.

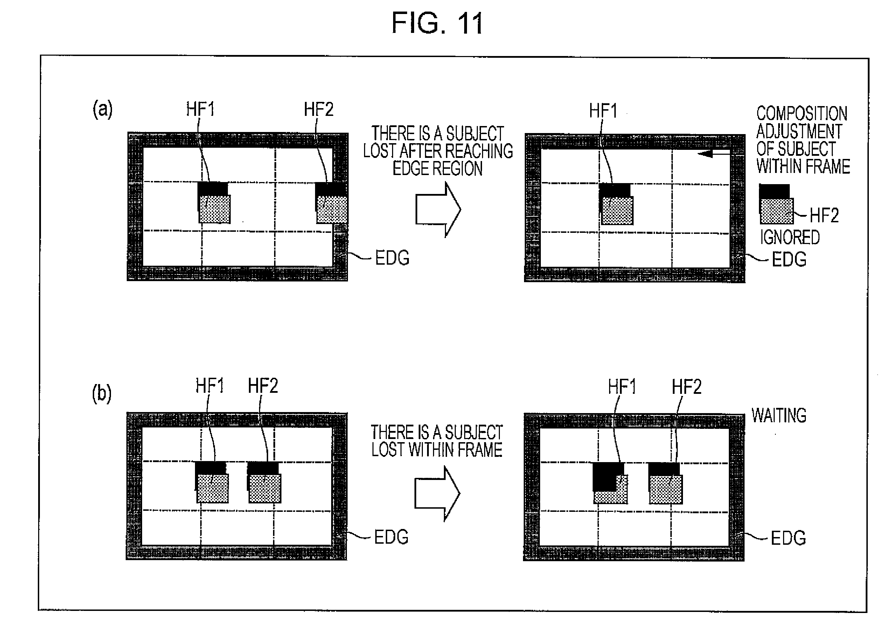

Fig. 11 schematically illustrates a specific example of an automatic imaging control technique serving as the second embodiment to be employed in the case that the number of detected subj ects is greater than one.
(a) in Fig. 11 illustrates behavior in the case that of two subjects (two people) HF1 and HF2 detected within the image frame G, one subject HF2 has been lost due to being out-of-frame.
As can also be clear from this drawing, in the event that one of the subjects HF has been lost due to being out-of-frame, this subject HF regarding which out-of-frame has occurred is not tracked (i.e., ignored), and composition adjustment is performed with the subject HF detected within the image frame G as the object. That is to say, there is a lost subject, and accordingly, optimal composition determination is performed again, but optimal composition determination by tracking a subject HF regarding which out-of-frame has occurred is not performed.

Also, (b) in Fig. 11 illustrates behavior in the case that of two subjects HF1 and HF2 detected within the image frame G, one subject HF1 has become lost in-frame (i.e., in the event of having not reached the edge region EDG immediately before becoming lost).
As shown in the drawing, in this case, standby for a certain period is carried out expecting that the subject HF1 that has become lost in-frame will change the direction to the front after a short while.
Though drawing is omitted, after standby is thus carried out for a certain period, in this case as well, subj ect detection is performed to confirm that a subj ect HF has been redetected within the image frame G, and then optimal composition determination and composition adjustment are performed.
Note that, in this case as well, in the event that a subject HF is not be redetected by subject detection after standby for a certain period, the processing will be performed again from subj ect search.

Incidentally, though can be conceived as a rare case, a situation can be assumed wherein all of the subjects HF detected in the image frame G have been lost due to being out-of-frame during composition adjustment.
Though drawing is omitted, in the event that all of the subjects HF within the image frame G have been lost due to being out-of-frame, the processing will be performed again from subject search.

Here, Fig. 11 illustrates a case where the number of detected subj ects is two for simplifying description as an example, but in the event of generalizing this case assuming that the number of subj ects is greater than one (including a case of three or more), a control technique serving as the second embodiment can be defined as follows.

### Specifically,

- in the event that all of the lost subjects HF regarding which out-of-frame has occurred, and also there is a non-lost subj ect HF within the image frame G (in other words, in the event that the lost subjects HF do not include a subject that has been lost in-frame, and also the lost subjects are not all of the subjects), optimal composition determination and composition adjustment are performed with detected subjects within the image frame G as the objects.
- in the event that the lost subjects HF include a subject HF that has become lost in-frame, standby is carried out for a certain period. After standby for a certain period, determination is made whether or not a subject HF has been redetected within the image frame G, and in the event that a subject HF has been redetected, optimal composition determination and composition adjustment are performed, and in the event that no subject HF has been redetected, the processing will be performed again from subject search.
- in the event that all of the subjects HF have been lost due to being out-of-frame, the processing will be performed again for subj ect search.

According to the above-mentioned control technique serving as the second embodiment, even in the event that the number of detected subj ects is greater than one, many more imaging and recordings can be realized without missing an imaging and recording opportunity as compared to a conventional technique for immediately entering subj ect search in response to a subject becoming lost during composition adjustment.

### 3-2. Processing Procedure

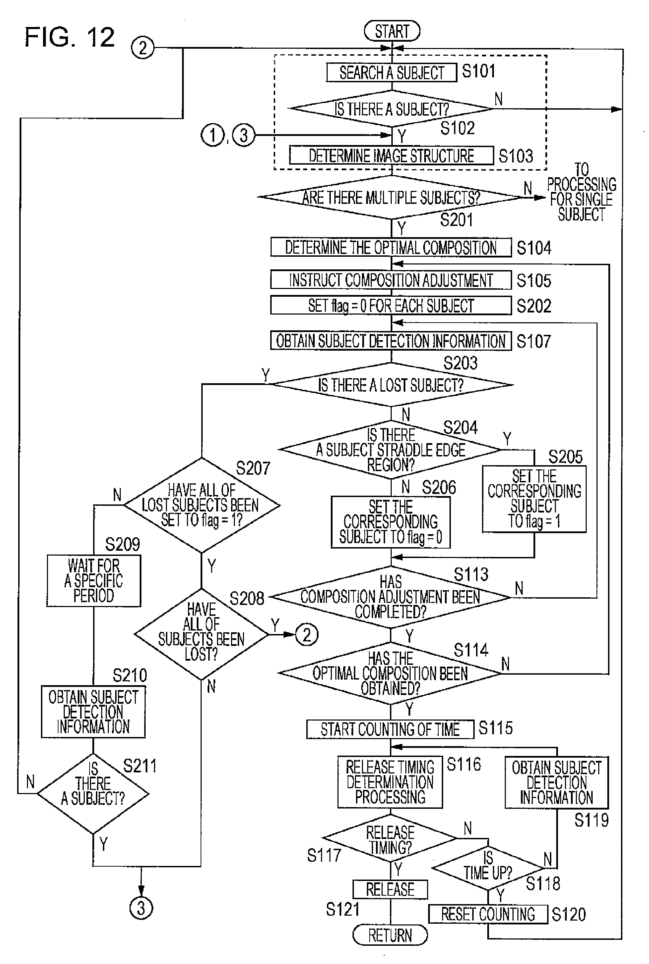

The flowchart in Fig. 12 illustrates a specific processing procedure to be performed for realizing the automatic imaging control technique serving as the second embodiment described above.
Note that Fig. 12 also illustrates the processing procedure to be performed for realizing the automatic imaging control technique serving as the second embodiment as a processing procedure that the control unit 27 shown in Fig. 6 executes, for example, in accordance with the program stored in the ROM 28.
Also, with the following description, processing having the same contents as already described processing is denoted with the same step number, and description thereof will be omitted.

First, with the processing shown in Fig. 12 as well, first, according to steps S101 through S103, subj ect search, and image structure determination in the event that a subj ect HF has been detected by this subject search are performed.

In this case, after image structure determination in the above step S103 is performed, in step S201 determination is made regarding whether or not the number of subjects HF is greater than one.
In the event that a negative result has been obtained in this step S201 that as a result of the image structure determination, the number of subjects HF detected within the image frame G is not greater than one (i.e., single), the flow proceeds to processing at the time of being single. Specifically, processing is executed in the range of steps S104 through S126 shown in the previous Fig. 10.
Thus, in the event that the number of detected subj ects is single, the processing corresponding to at the time of single, described with the previous first embodiment, can be performed.

Now, with regard to the processing in steps S104 through S126 shown in Fig. 10 to be executed as the processing corresponding when single, in the event that a positive result has been obtained in step S126, the flow advances to the processing in step S103 shown in Fig. 12 (see a correspondence relation between the mark of 1 surrounded with a circle shown in Fig. 10 and the mark of 1 surrounded with a circle shown in Fig. 12).
Thus, suitable switching can be performed so that processing at the time of a plurality which will be described below is executed in response to a case where the number of subj ects HF is originally single, increases to a plurality after tracking for a certain period, or standby for a certain period.

Also, in the event that a positive result has been obtained in the above step S201 that as a result of image structure determination in step S103, the number of subjects HF detected within the image frame G is multiple, processing in step S104 and thereafter in Fig. 12 is executed as processing at the time of a plurality.
First, the optimal composition determination in the above step S104, and the composition adjustment instruction in the subsequent step S105 are the same as those described in Fig. 10.

In this case, after the composition adjustment instructions in the above step S105 are performed, in step S202 processing is executed to set flag = 0 for each subj ect HF.
In this way, after flag = 0 is set for each subj ect HF, in step S107 subj ect detection information is obtained, and then in step S203 determination is made regarding whether or not there is a lost subj ect HF.

In the event that a negative result has been obtained in step S203 that there is no lost subject HF, the flow proceeds to step S204 to determine whether or not there is a subj ect HF that has reached the edge region EDG
In the event that a positive result has been obtained in step S204 that there is a subj ect HF that has reached the edge region EDG, the flow proceeds to step S205 to execute processing for setting the corresponding subject to flag = 1. That is to say, the flag of the subject HF that has reached the edge region EDG is updated to 1.
After execution of the flag updating processing in this step S205, the flow advances to step S113.

On the other hand, in the event that a negative result has been obtained in the above step S204 that there is no subj ect HF that has reached the edge region ERG, the flow proceeds to step S206 to set the corresponding subj ect to flag = 0, and then advances the processing to step S113.

In this case, in the event that a negative result has been obtained in the determination processing in the above step S113 that the composition adjustment has not been completed, the flow returns to step S107 shown in Fig. 12 (subject detection information obtaining processing).
Also, in the event that a positive result has been obtained in the above step S113 that the composition adjustment has been completed, processing is executed in step S114 and thereafter (in the range of S114 through S121). Thus, in this case as well, after completion of the composition adjustment, final release timing determination processing in the event that the composition is suitable, and release processing corresponding to that the release timing is suitable, subj ect search in the event that the release timing is not suitable, and the time is up, or composition adjustment instructions in the event that the composition is not suitable, are performed.

As can also be understood from the above description, even in the case that the number of detected subjects is multiple, in the event that a subject becoming lost has not occurred during composition adjustment, in response to the results of determination regarding whether or not the composition is suitable, determination regarding whether or not the final release timing is suitable, release processing (automatic imaging and recording) or re-search of a subject is performed.

On the other hand, in the event that a subject becoming lost has occurred during composition adjustment, and a positive result has been obtained in the above step S203 that there is a lost subj ect HF, the flow proceeds to processing in step S207 and thereafter.
First, in step S207 determination is made regarding whether or not all of the lost subjects HF have flag = 1. That is to say, determination is made regarding whether or not all of the lost subjects HF regarding which out-of-frame has occurred.

In the event that a positive result has been obtained in step S207 that all of the lost subjects HF have flag = 1, the flow proceeds to step S208 to determine whether or not all have been lost. Specifically, determination is made regarding whether or not all of the subjects HF detected (detected before the optimal composition determination in step S104) within the image frame G have been lost.
Upon description being made for confirmation, a case where a negative result has been obtained in this step S208 that all have not been lost means that all of the lost subjects HF have gone out-of-frame, and also there is a non-lost subject HF within the image frame G (equivalent to the case of (a) in Fig. 11).
On the other hand, in the event that a positive result has been obtained in step S208 that all have been lost, all of the subjects HF detected within the image frame G have been lost due to being out-of-frame.

Based on this point, in the event that a negative result has been obtained in the above step S208 that all have not been lost, flow returns to the image structure determination processing in step S103 as shown in the drawing. Specifically, in the event that all of the lost subjects HF have gone out-of-frame, and also there is a non-lost subject HF within the image frame G (in the event that of the lost subjects HF, there is no subject that has become lost in-frame, and also all have not been lost), the optimal composition determination and composition adjustment are performed with a detected subject within the image frame G as the object.

Also, in the event that a positive result has been obtained in the above step S208 that all have been lost, the flow returns to step S101 to perform the processing again from subj ect search. Specifically, as described above, in response to a case where all of the subjects HF detected within the image frame G have been lost due to being out-of-frame, the processing is performed again from subj ect search.

Also, in the event that a negative result has been obtained in the above step S207 that all of the lost subjects HF do not have flag = 1, this means that the lost subjects HF include a subject that has become lost in-frame (equivalent to the case of (b) in Fig. 11).
Accordingly, in the event that a negative result has been obtained in the above step S207, the flow proceeds to step S209, and stands by for a certain period.

After standby for a certain period by the processing in the above step S209, in step S210 subject detection information is obtained, and then in step S211 determination is made regarding whether or not a subj ect HF has been detected.

In the event that a positive result has been obtained in the above step S211 that a subj ect HF has been detected, the flow returns to step S103. Thus, optimal composition determination can be performed with a redetected subject HF after standby for a certain period as the object.

On the other hand, in the event that a negative result has been obtained in the above step S211 that no subj ect HF has been detected, the flow returns to step S101, and thus, in the event that no subject HF was not redetected after standby for a certain period, the flow performs the processing again form subj ect search.

### 4. Automatic Imaging Control Serving as Third Embodiment

### 4-1. Behavior for Preferred Face Being Set

Now, some of recent digital still cameras perform setting of what we might call "preferred face" by applying face recognition technology. Specifically, for example, regarding a particular face (subject) registered beforehand, such a digital still camera preferentially enables automatic adjustment of imaging parameters such as focus, exposure, and so forth suitable for the subj ect thereof.
With regard to automatic imaging operation according to automatic composition adjustment in the present example as well, such a concept of preferred faces can be employed, and a control technique may be employed whereby many more imaged images of a subject set as a preferred face can be recorded, for example.
The third embodiment proposes an automatic imaging control technique suitable for a case where a preferred face mode that enables many more imaged images of a subject serving as a preferred face to be recorded has been set.

Note that, with the present example, a subject to be set as a preferred face can be defined as "subject HF satisfying a particular condition". Specific examples of this include to set a subject registered beforehand as a preferred face, or to automatically set a subject having a particular feature such as a child or the like as a preferred face.
Examples of a technique for registering a subject serving as a preferred face beforehand include a technique for allowing a user to specify a subject to be registered as a preferred face out of subjects projected on images imaged and recorded in the past by operating a touch panel or the like, and a technique for allowing a user to image a subj ect to be registered as a preferred face, and registering this imaged subj ect as a preferred face.
Also, examples of a technique for automatically setting a subj ect having a particular feature such as a child or the like as a preferred face include a technique for performing processing to confirm whether or not there is a subj ect having a predetermined particular feature such as a child's face or the like within the image frame G in the image structure determination processing, and in the event that there is the corresponding subject as a result thereof, automatically setting this subject as a preferred face.

Let us say that in order to simplify the following description, a subject serving as a preferred face is a subject registered beforehand.
In response to this, the control unit 27 in the case of the present embodiment executes control and processing for allowing a user to register a subject serving as a preferred face using at least one technique of the above-mentioned two techniques regarding "a subject registered beforehand".

Based on the above-mentioned premises, description will be made regarding the automatic imaging control technique serving as the third embodiment.

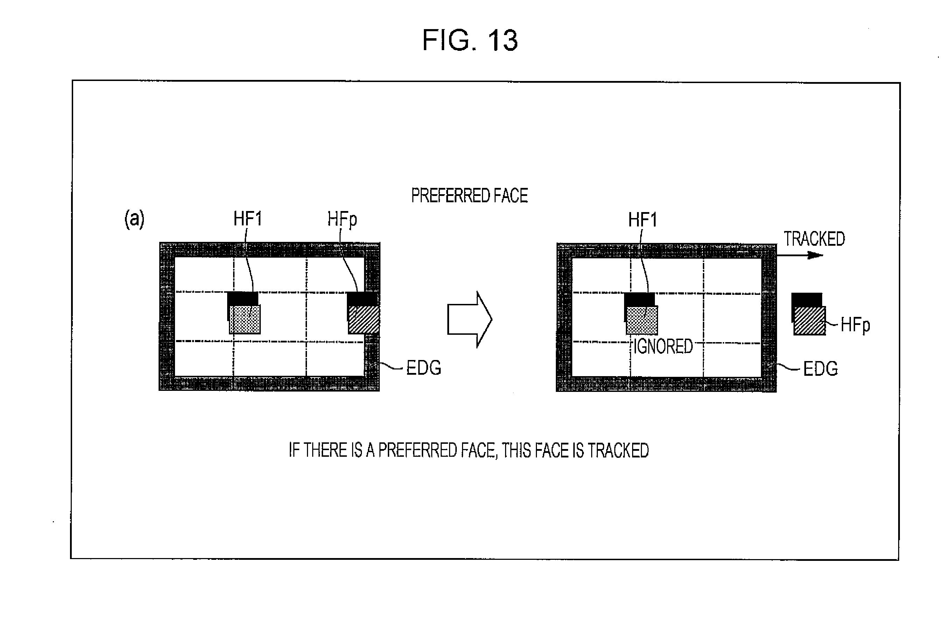

Fig. 13 schematically illustrates a specific example of the automatic imaging control technique serving as the third embodiment corresponding to a case where a preferred face is set.
Note that this Fig. 13 also illustrates a case where the number of detected subjects within the image frame G is two in order to simplify description as an example. Here, a case where of the two detected subj ects HF, one of the subj ects HF is a subj ect serving as a preferred face (hereafter, referred to as "preferred subject HFp") is shown as an example. Note that, as shown in the drawing, a subject HF that is not the preferred subject HFp will be referred to as "subject HF1".

As shown in this Fig. 13, in the event that the preferred subject HFp has been detected within the image frame G, when this preferred subject HFp is lost due to being out-of-frame during composition adjustment, this preferred subject HFp that has gone out-of-frame is tracked.
Specifically, with the previous second embodiment, in the event that the number of detected subj ects is greater than one, and with regard to a subj ect HF regarding which out-of-frame has occurred, tracking thereof is not performed, but with the third embodiment, in the event that a subject HF regarding which out-of-frame has occurred is the preferred subj ect HFp, this subject is tracked for a certain period so that imaging and recording regarding this preferred subject HFp is preferentially performed.

Here, Fig. 13 illustrates an example wherein in the event that the number of detected subjects is "two", and also one thereof is the preferred subject HFp, and this preferred subject HFp alone has gone out-of-frame, as the simplest case, but as an actual case, various cases may occur such as a case where the number of detected subjects is three or more, a case where being lost in-frame has occurred instead of being out-of-frame, a case where no preferred subject HFp has been detected, and so forth.

At this time, in order to perform many more imaging and recordings regarding the preferred subject HFp, at the time of the preferred subject HFp being lost due to being out-of-frame, this preferred subj ect HFp should constantly be tracked.
Alternatively, when the preferred subject HFp is included in the image frame G, even if there is another subj ect HF that has gone out-of-frame, this other subject HF is prevented from being tracked.

Also, as described above, in the event that the preferred subj ect HFp has been detected within the image frame G, a case can also be conceived where another subject HF has becoming lost in-frame instead of being out-of-frame.
Here, in the event that the preferred subject HFp has been detected within the image frame G, and also there is another subject HF that has becoming lost in-frame, if only the imaging and recording of the preferred subject HFp are consistently prioritized, it can be conceived that in response to the preferred subject HFp being detected within the image frame G as described above, standby for a certain period corresponding to a case where there is a subject HF that has become lost in-frame is not carried out. That is to say, this is a technique to realize that imaging and recording regarding the preferred subject HFp are rapidly performed just for the worth thereof.
However, with the present example, in response to a case where the preferred subject HFp has been detected within the image frame G, but there is another subject HF that has become lost in-frame as described above, a technique is employed where standby is carried out for a certain period.
Note that which of the above-mentioned techniques is employed should be selected according to an actual embodiment as appropriate.

Also, in the event that the preferred subject HFp has been detected within the image frame G, this preferred subject HFp may become lost in-frame.
As described above, in response to a case where the preferred subject HFp has become lost in-frame, standby for a certain period is carried out.

Also, as described above, there may be a case where the preferred subject HFp has not been detected as a subject to be subjected to the optimal composition determination.
The correspondence in this case is the same as described in the previous second embodiment.
Specifically, in the event that the preferred subject HFp has not been detected in this way,
- in the event that all of the lost subjects HF have gone out-of-frame, and also there is a non-lost subject HF within the image frame G, optimal composition determination and composition adjustment are performed with detected subjects HF within the image frame G as the objects.
- in the event that all of the subjects HF have been lost due to being out-of-frame, the processing will be performed again from subject search.
- in the event that the lost subjects HF include a subject HF that has become lost in-frame, standby is carried out for a certain period, determination is then made whether or not a subject has been redetected within the image frame G, and in the event that a subject has been redetected, optimal composition determination and composition adjustment are performed, and in the event that no subject has been redetected, the processing will be performed again from subject search.

Here, in order to realize operation described above, specifically, with the third embodiment, in the event that a subject being lost has occurred during composition adjustment, correspondence processing for each case classification as follows is performed.
- In the event that lost subjects HF include subjects HF regarding which out-of-frame has occurred, and also the subjects HF regarding which out-of-frame has occurred include a preferred subject HFp,
   → determination is made whether or not a subject has been redetected after tracking for a certain period in the out-of-frame direction of the preferred subject HFp, and in the event that a subject has been redetected, optimal composition determination and composition adjustment are performed with this redetected subject as the object, and in the event that no subject has been redetected, the processing is performed again from subj ect search.
- In the event that there is a subject HF that has become lost in-frame, and also there are also subjects HF that have been lost due to being out-of-frame, but the subjects HF that have been lost due to being out-of-frame include no preferred subject HFp,
   → determination is made whether or not a subject has been redetected after standby for a certain period, and in the event that a subject has been redetected, optimal composition determination and composition adjustment are performed with this redetected subject as the object, and in the event that no subject has been redetected, the processing is performed again from subj ect search.
- In the event that all of the lost subjects HF have gone out-of-frame, and also the subjects HF that have been lost due to being out-of-frame include no preferred subj ect HFp, and also there is a non-lost subject HF within the image frame G,
   → optimal composition determination and composition adjustment are performed with a detected subject within the image frame G as the object.
- In the event that all of the lost subjects HF have gone out-of-frame, and also the subjects HF that have been lost due to being out-of-frame include no preferred subj ect HFp, and also all have been lost,
   → the processing is performed again from subject search.

Correspondence processing for each case classification as described above is executed, whereby tracking for a certain period of the preferred subject HFp regarding which out-of-frame has occurred, or standby for a certain period regarding the preferred subj ect HFp that has become lost in-frame can be realized, and thus, many more imaging and recordings regarding the preferred subject HFp can be performed.
Also, at the same time, in response to a case where no preferred subject HFp has been detected, the same operation as with the second embodiment may be performed.

### 4-2. Processing Procedure

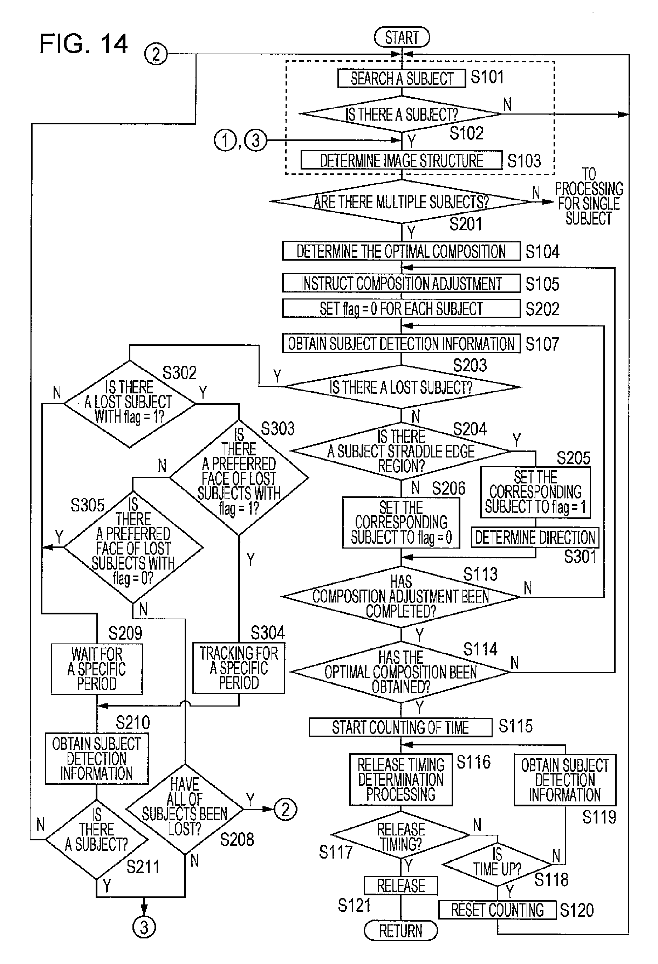

The flowchart in Fig. 14 illustrates a specific processing procedure to be performed for realizing the automatic imaging control technique serving as the third embodiment described above.
Note that Fig. 14 also illustrates the processing procedure to be performed for realizing the automatic imaging control technique serving as the third embodiment as a processing procedure that the control unit 27 shown in Fig. 6 executes, for example, in accordance with the program stored in the ROM 28.

As can be understood by comparing this Fig. 14 and the previous Fig. 12, the processing procedure in the case of the third embodiment differs from the processing procedure in the case of the second embodiment in that when determination is made in step S204 that there is a subj ect HF that has reached the edge region, processing is executed for setting the corresponding subject HF to flag = 0 (S205), and also direction determination processing in step S301.
Specifically, with the previous second embodiment, in the event that the number of detected subj ects is greater than one, "tracking" itself is not performed, and accordingly, direction determination processing in the case that multiple subj ects HF have been detected is unnecessary, but with the third embodiment, tracking regarding the preferred subj ect HFp may be performed, and accordingly, the direction determination processing in the above step S301 is executed.
Specifically, the direction determination processing in this step S301 is executed at timing after execution of the flag updating processing in step S205 and also before execution of the determination processing in step S113, as shown in the drawing.
Note that, upon description being made for confirmation, in the event that the number of subjects HF that have reached the edge region EDG is greater than one, the processing in the above step S301 serves as processing for obtaining direction information for each subject HF that has reached the edge region EDG
Here, in the event that the subjects HF that have reached the edge region EDG include the preferred subject HFp, such direction determination processing can be performed regarding this preferred subject HFp alone.

Also, in the event of comparing with the processing procedure in the case of the second embodiment, with the processing procedure in the case of the third embodiment, the processing contents at the time of a positive result being obtained in step S203 that there is a lost subject, and thereafter differ.

Also, though drawing is omitted, the control unit 27 in this case executes processing for accepting registration of a subject serving as a preferred face described above, which also differs from the case of the second embodiment.

Now, in the case of the third embodiment, in the event that a positive result has been obtained in the above step S203 that there is a lost subject, determination is made by the processing in step S302 in the drawing whether or not there is a subject HF that has been lost with flag = 1. Specifically, first, determination is made whether or not of the lost subjects HF, there is a subj ect HF that has been lost due to being out-of-frame.

In the event that a positive result has been obtained in step S302 that there is a subject HF that has been lost with flag = 1, in step S303 determination is made regarding whether or not there is a subject HF that has been lost with flag = 1 having a preferred face of the subjects HF that have been lost with flag = 1.
In the event that a positive result has been obtained in this step S303 that there is a subject HF that has been lost with flag = 1 having a preferred face of the subj ects HF that have been lost with flag = 1, the flow proceeds to step S304 to execute processing for tracking for a certain period. Specifically, this processing allows, regarding the preferred subject HFp that has been lost (lost due to being out-of-frame) with flag = 1, pan driving in the same direction as the out-of-frame direction thereof to be performed for a certain period.

After executing tracking processing for a certain period in the above step S304, the flow proceeds to step S210 to obtain subj ect detection information, and then in step S211 determination is made regarding whether or not a subject HF has been detected.
Behavior of each case where a positive result or negative result has been obtained in this step S211 is the same as described in previous Fig. 12.

Also, in the event that a negative result has been obtained in the above step S303 that there is no subject HF having a preferred face of the subjects HF that have been lost with flag = 1, the flow proceeds to step S305 to determine whether or not there is a subject HF that has been lost with flag = O.
Here, upon description being made for confirmation, a case where determination is made in this step S305 that there is a subject HF that has been lost with flag = 0 means a case where there is a subject HF that has become lost in-frame, and also there is a subject HF that has been lost due to being out-of-frame, but there is no preferred subject HFp of the subjects HF that have been lost due to being out-of-frame.
On the other hand, a case where determination is made in the above step S305 that there is no subject HF that has been lost with flag = 0 means a case where lost subjects HF have all gone out-of-frame, and also there is no preferred subj ect HFp of these subj ects HF that have gone out-of-frame.

Based on this point, in the event that a positive result has been obtained in the above step S305 that there is a subject HF that has been lost with flag = 0, the flow proceeds to step S209 to stand by for a certain period.
Specifically, in this case, subjects HF that have become lost in-frame or non-lost subjects HF within the frame may include the preferred subject HFp, and accordingly, standby is performed for a certain period instead of entering tracking or search of a subj ect HF.
Note that, even if the preferred subject HFp is not included in being lost in-frame or in-frame non-lost subjects HF, in this case, it is determined that at least there is an being lost in-frame subj ect HF, and in this sense, it has usefulness to perform standby for a certain period.
Also, upon description being made for confirmation, in this case as well, after execution of standby processing in the above step S209, processing in step S210 → S211 is executed in the same way as with the case of the second embodiment, and thus, determination regarding whether or not a subject HF has been redetected, and optimal composition determination and composition adjustment in the case that a subject HF has been redetected, or subject search in the case that not subject HF has been redetected is performed.

Also, in the event that a negative result has been obtained in the above step S305 that there is no subj ect HF that has been lost with flag = 0, the flow proceeds to step S208 to determine whether or not all have been lost.
Here, a case where a determination result has been obtained in this step S208 that all have been lost means a case where all of the subjects HF have been lost due to being out-of-frame, and also these do not include the preferred subject HFp. Accordingly, in the event that a positive result has been obtained in step S208 that all have been lost, the flow returns to step S101 to perform the processing again from subj ect search.

Also, in the event that a determination result has been obtained in the above step S208 that all have not been lost, all of the lost subjects HF have gone out-of-frame (however, the preferred subject HFp is not included), and also there is a non-lost subject HF. Accordingly, in the event that a negative result has been obtained in step S208 that all have not been lost, the flow proceeds to step S103 to perform optimal composition determination and composition adjustment with a detected subject within the image frame G as the object.

### 5. Automatic Imaging Control Serving as Fourth Embodiment

### 5-1. Zooming Restriction Using Edge Region

Now, as can also be understood from the above-mentioned description, the first through third embodiments perform operation switching of non-tracking/tracking (operation switching of standby/tracking) of a subject HF according a positional relation between the subject HF before becoming lost and the edge region EDG
On the other hand, the fourth embodiment which will be described below performs operation switching of continuation/stop of zoom operation according to a positional relation between a subject HF and the edge region EDG Specifically, the fourth embodiment performs switching of continuation/stop of zoom operation according to a positional relation between a subject HF and the edge region regarding zoom operation to be performed as one element of composition adjustment.

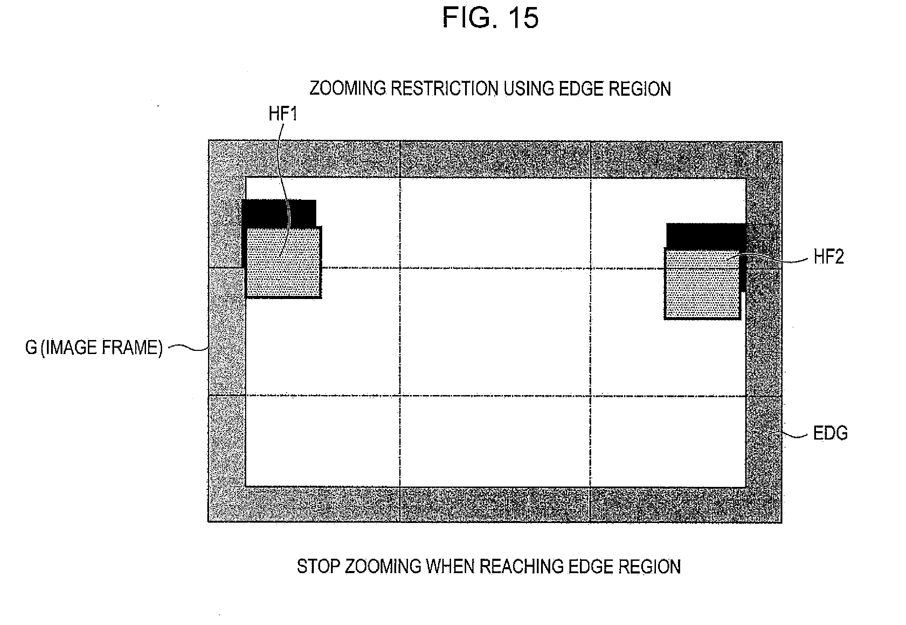

Fig. 15 is a diagram schematically illustrating a specific example of an automatic imaging control technique serving as the fourth embodiment for performing switching of continuation/stop of zoom using such an edge region EDG
Now, as can also be understood from the above-mentioned description, with automatic imaging operation according to automatic composition adjustment of the present example, adjustment of a zoom angle serving as an adjustment item for performing composition adjustment is included. In other words, zoom operation (zoom-in operation) is performed along with composition adjustment.
With the fourth embodiment, during zoom-in operation along with such composition adjustment, in the event that a subject HF detected within the image frame G has reached (overlapped) the edge region EDG as shown in the drawing, zoom operation is stopped.
The drawing illustrates a case where of two subj ects HF of a subj ect HF1 and a subj ect HF2 detected within the image frame G, the subject HF1 has reached the edge region EDG, as an example. In this way, in the event that multiple subjects HF have been detected within the image frame G, zoom operation is stopped according to at least any one thereof having reached the edge region EDG

According to the automatic imaging control technique serving as the fourth embodiment as described above, a subject HF can be prevented from going out-of-frame due to zoom operation accompanied with composition adjustment using the edge region EDG
Specifically, according to the automatic imaging control technique of the fourth embodiment as well, operation switching relating to automatic imaging operation is performed based on a non-conventional entirely new determination reference called as a positional relation between the edge region EDG and a subject HF, whereby non-conventional intelligent automatic imaging operation useful for a user can be realized.

### 5-2. Processing Procedure

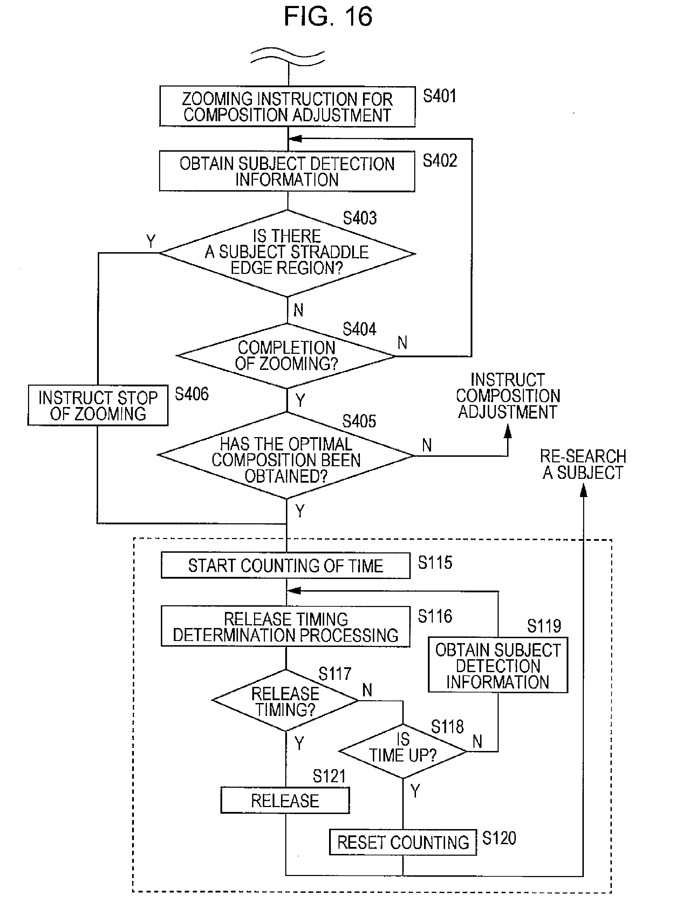

The flowchart in Fig. 16 illustrates a specific processing procedure to be performed for realizing the automatic imaging control technique serving as the fourth embodiment described above.
Note that Fig. 16 also illustrates the processing procedure to be performed for realizing the automatic imaging control technique serving as the fourth embodiment as a processing procedure that the control unit 27 shown in Fig. 6 executes, for example, in accordance with the program stored in the ROM 28.

Now, with the present example, though there are pan and tilt along with zoom as adjustment items for composition adjustment, at the time of performing composition adjustment according to adjustment of these three directions, it is normal that adjustment of pan and tilt is first performed, and after completion thereof, zoom adjustment is lastly performed.
On the premise thereof, Fig. 16 illustrates, assuming that the composition adjustment in the pan and tilt directions have already been completed, the procedure of processing wherein zoom instructions are performed thereafter.

First, in step S401 zooming instructions are performed for composition adjustment. Specifically, in this drawing, the optical system unit 21 is instructed regarding the information of a zoom angle determined from the information of a composition (imaging field-of-view selection angle) determined to be optimal by the optimal composition determination processing of which the drawing is omitted to start driving of the zoom mechanism.

In the subsequent step S402, subject detection information is obtained, and in further subsequent step S403 determination is made regarding whether or not there is a subject HF that has reached the edge region.
In the event that a positive result has been obtained in the above step S403 that there is no subject HF that has reached the edge region EDG, the flow proceeds to step S404 to determine whether or not zoom operation has been completed. In the event that a negative result has been obtained in this step S404 that zoom has not been completed, the flow returns to step S402 as shown in the drawing.

As can also be understood from the above description, in Fig. 16, loop processing according to steps S402 → S403 → S404 → S402 is formed. According to this loop processing, the flow waits for occurrence of either a state in which a subj ect HF that has reached the edge region has been detected or a state in which zoom operation has been completed.

In the event that a positive result has been obtained in the above step S404 that zoom operation has been completed, the flow proceeds to step S405 to determine whether or not the composition is suitable. The processing contents in this step S405 are the same as the processing contents in step S114 described in the previous Fig. 10.

In the event that a negative result has been obtained in the above step S405 that the composition is unsuitable, composition adjustment instructions (equivalent to the processing in step S105 in the previous Fig. 10) are performed as shown in the drawing.
Also, in the event that a positive result has been obtained in the above step S405 that the composition is suitable, processing of step S115 and thereafter (in the range of S115 through S121) described in the previous Fig. 10 is executed. Specifically, in this case as well, in the event that determination is made that the composition is suitable, final release timing determination processing is performed, such as for a smiling face or the like, and release processing in response to release timing being determined to be suitable, and subject re-search in the event that the release timing is not suitable and the time is up.

Also, in the event that a positive result has been obtained in the above step S403 that there is a subj ect HF that has reached the edge region, the flow proceeds to step S406 to perform zoom stop instructions. That is to say, zoom stop instructions are given as to the optical system unit 21.

Here, after performing zoom stop instructions in the above step S406, the flow advances to step S115 as shown in the drawing. Specifically, in the event that a subject HF has reached the edge region EDG and stopped zoom, the flow directly proceeds to final release timing determination processing without performing determination in step S405 regarding whether or not the composition is suitable.

Note that it goes without saying that determination processing in step S405 regarding whether or not the composition is suitable may be performed after execution of the processing in the above step S406.
With regard to which behavior described above is employed as the behavior after stop of zooming, suitable one should be selected according to an actual embodiment and so forth as appropriate.

### 6. Automatic Imaging Control Serving as Fifth Embodiment

### 6-1. Self Timer Activation Control Using Edge Region

Next, description will be made regarding the fifth embodiment.
With the fifth embodiment, the contents of automatic imaging operation to be taken as the premise differ from that in each embodiment described above. Specifically, the fifth embodiment takes automatic imaging operation according to a self timer as the premise.

Here, the automatic imaging operation according to a self timer is conventionally equivalent to operation for automatically performing release processing (recording of an imaged image) after elapse of predetermined time since an operation of the release button 31a was detected. Specifically, when performing such automatic imaging according to a self timer, the user is instructed to perform switching instructions to a self timer mode beforehand, and in the event that such switching instructions to the self timer mode has been performed, the digital still camera performs release processing after standby for a certain period according to the pressing operation of the release button 31a.

However, according to such conventional self timer automatic imaging operation, release processing is evenly executed according to elapse of predetermined time after a release operation regardless of the situation of a subject HF within the image frame G, and accordingly, a failure photo may be recorded with a subject HF protruding out of the image frame G, for example.

Therefore, with the fifth embodiment, realization of more intelligent automatic imaging operation in which the situation of a subject HF within the image frame G is taken into consideration is promoted regarding the self timer automatic imaging operation.

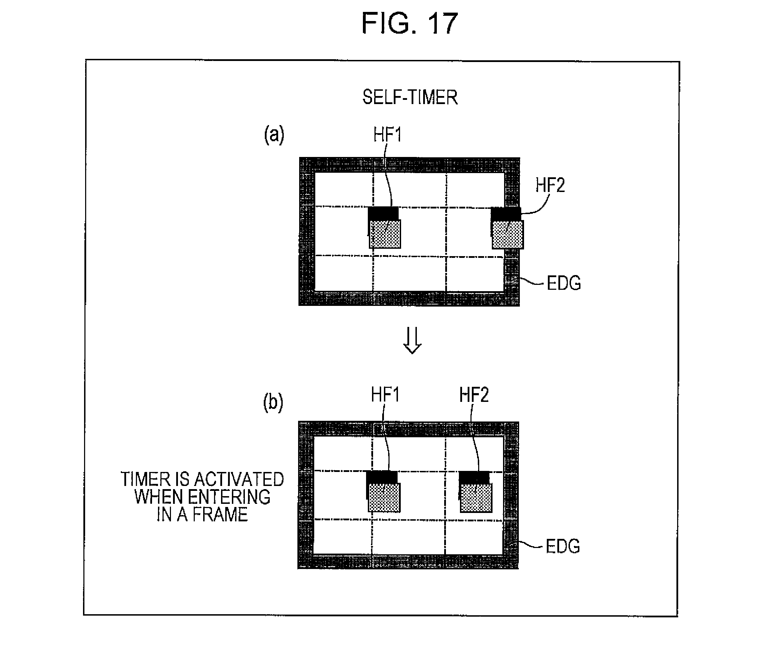

Fig. 17 is a diagram schematically illustrating a specific example of the automatic imaging control technique serving as the fifth embodiment.
First, as a premise, with the self timer automatic imaging of the present example, the user is allowed to set the number of subjects (number of persons) HF serving as automatic imaged obj ects. With the example in Fig. 17, let us assume that "2" has been set as the number of such persons to be automatically imaged.

As the automatic imaging control according to the fifth embodiment, in the way shown as transition from (a) in Fig. 17 to (b) in Fig. 17, a self timer is activated in response to the number of subjects HF set as the number of persons to be automatically imaged being accommodated within a region serving as the inner side than the edge region EDG within the image frame G
Specifically, in this case, in response to switching instructions to the self timer mode being performed, the flow stands by until the set number of subj ects HF are detected within a region on the inner side than the edge region EDG, and activates the self timer according to the set number of subjects HF being detected within the inner side region than the edge region EDG In response to the time count value according to the self timer thus activated reaching a predetermined value, release processing is performed.

According to the automatic imaging control technique serving as the fifth embodiment as described above, in response to a subject HF to be automatically imaged being detected within a region on the inner side than the edge region EDG, the self timer can be activated. That is to say, thus, a failure photo as described above can effectively be prevented from being recorded.

Also, according to the automatic imaging control technique serving as the fifth embodiment, activation of the self timer can be automated. Specifically, with conventional self timer automatic imaging, after performing switching instructions to the self timer mode, the operation of the release button 31a that can be regarded as a timer activation operation has been required, but according to the fifth embodiment, the use of such an operation for timer activation can be eliminated.

Heretofore, it has frequently been observed that after performing a timer activation operation, the operator moves to a position to be accommodated in the image frame G in a panicked manner, but with the fifth embodiment, as described above, in response to the number of set persons being accommodated within the region, the timer is automatically activated, and accordingly, the operator can act with allowance just for the worth thereof, and at this point of view, usefulness can be improved as compared to a conventional manner.

In this way, according to the fifth embodiment, with regard to the self timer automatic imaging operation, more intelligent automatic imaging operation in which the situation of a subject HF within the image frame G is taken into consideration can be realized as compared to a conventional manner.

Note that, upon description being made for confirmation, the automatic imaging control technique serving as the fifth embodiment as described above can be regarded as a technique for performing operation switching of inactivation/activation of the self timer according to a positional relation between a subject HF and the edge region EDG

### 6-2. Processing Procedure

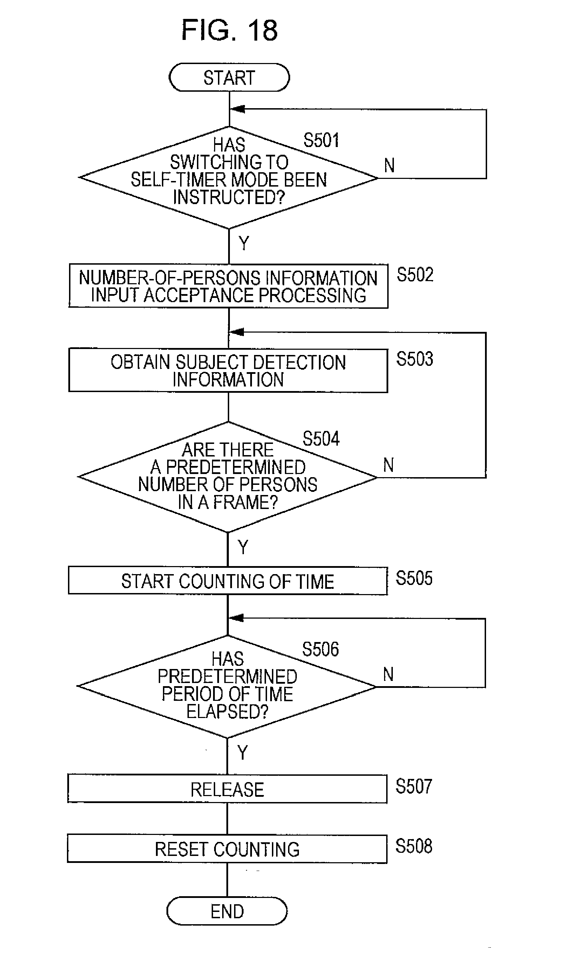

The flowchart in Fig. 18 illustrates a specific processing procedure to be performed for realizing the automatic imaging control technique serving as the fifth embodiment described above.
Note that Fig. 18 also illustrates the processing procedure to be performed for realizing the automatic imaging control technique serving as the fifth embodiment as a processing procedure that the control unit 27 shown in Fig. 6 executes, for example, in accordance with the program stored in the ROM 28.

First, according to processing in step S501, the flow stands by until switching instructions to the self timer mode are performed. In the case of the present example, switching instructions to the self timer mode are performed by the user performing operation input using a GUI displayed on the display unit 33.

For example, in the event that the above-mentioned switching instructions to the self timer mode is performed by operation input using a GUI as described above, in step S502 number-of-persons information input acceptance processing is executed. Specifically, the user is allowed to perform display of a number-of-persons information input screen for performing input of number-of-persons information on the display unit 33, and to perform input of number-of-persons information. The processing in this step S502 is ended in response to operations for finalizing input number-of-persons information being performed.

After accepting input of number-of-persons information by the user using the processing in the above step S502 (i.e., after number-of-persons information is set), in step S503 subject detection information is obtained, and then in step S504 determination is made regarding whether or not the number of persons within the frame is in agreement with the number of set persons. Specifically, determination is made regarding whether or not subjects HF equivalent to the number of persons input (set) by the input acceptance processing in the above step S502 have been detected within a region on the inner side than the edge region EDG

In the event that a negative result has been obtained in the above step S504 that the number of persons within the frame is not in agreement with the number of set persons, the flow returns to step S503. That is to say, thus, the information obtaining processing in step S503 → the determination processing in step S504 are repeated until the number of set persons is detected within the frame.

On the other hand, in the event that a positive result has been obtained in the above step S504 that the number of persons within the frame is in agreement with the number of set persons, the flow proceeds to step S505 to start counting of time, and then in step S506 stands by until predetermined time elapses. Specifically, the flow stands by until the value of counting of time started in the above step S505 reaches a predetermined value.

In the event that the predetermined time has elapsed, in step S507 release processing is executed.
After executing the release processing in this way, in step S508 counting of time is reset. According to execution of the processing in this step S508, the series of processing shown in this drawing is ended.

Now, with the above description, only a condition has been imposed wherein the number of set subjects HF is detected within the region on the inner side than the edge region EDG as a condition for activating the self timer, but further, another condition may also be added.
For example, an arrangement may be made wherein specification of a particular face is accepted together at the time of acceptance of the number of set persons, and only in the case that a condition is satisfied wherein the number of set subjects HF are detected in a region on the inner side than the edge region EDG, and also the detected subjects HF include the above specified particular face, activation of the self timer is started.
For example, when intending to perform imaging under an environment where a great number of persons meat, such as a famous tourist site, or the like, an unintended subject HF other than the operator may get into the image frame G immediately after the operator performs switching instructions to the self timer mode. In such a case, if timer activation is performed in response to only detection of the number of set persons within a region on the inner side than the edge region EDG as described above, a failure photo such as a photo where a subject HF serving as the operator does not appear, or even if appears but protrudes out of the frame, may be recorded.
As described above, if a technique for also imposing a face condition is employed, timer activation and release can be prevented from being performed in the event that a particular face (the operator's face is set in the above case) does not appear in a photo, whereby an intended imaged image can properly be recorded even under a situation as with the above example.

Alternatively, a condition relating to the size (face size) of a subj ect HF can be employed as a condition to be imposed along with a condition regarding the number of set persons. As an example, it can be conceived to impose a condition to the effect that the face sizes of all of the subjects HF of the number of set persons are the same size.
For example, at the time of automatic imaging using the self timer, subjects HF to be imaged more likely to array in a position serving as generally equal distance from the digital still camera 1, and on the other hand, an unintended subject HF more likely to traverse the front or back of the subjects HF to be imaged more likely to array in a position serving as generally equal distance in this way. Accordingly, if a condition that the face sizes of subj ects HF are the same as described above is imposed, automatic timer activation at unintended timing according to detection of an unintended subject HF can be prevented, and consequently, in this case as well, an intended imaged image can properly be recorded.

Also, the operator (can be regarded as a composition decider) can be allowed to perform display representing the edge region EDG on the display unit 33 with the intent of allowing the operator to readily recognize the position of the edge region EDG within the image frame G

### 7. Modifications

Description has been made so far regarding the embodiments of the present invention, but the present invention is not restricted to the specific examples described so far.
For example, the described numeric values regarding the region width of the edge region EDG, and time length (certain period) for performing tracking/standby are just an example, and not restricted to these numeric values. Also, time length for performing tracking/standby may not be fixed.

Also, with the first through third embodiments, a case has been shown as an example wherein tracking of a subj ect HF is performed in the pan direction (horizontal direction: lateral direction) alone, but of course, tracking in the tilt direction (vertical direction: longitudinal direction) may also be performed together, or tracking in the tilt direction alone may also be performed. With regard to the tilt direction as well, detection of the frame out direction is performed by determining which side of the edge region EDG a lost subject HF has reached before becoming lost (i.e., this case determines which side of the upper hem side/lower hem side the lost subj ect HF has reached).

Also, the edge region EDG has been set so as to cover each of the four sides of the image frame G, but for example, in the event of assuming the pan direction (horizontal direction) alone as the out-of-frame direction of a subj ect HF as described as an example with the first through third embodiments, and performing tracking of a subj ect HF in the pan direction alone, the edge region EDG should be set to at least the right side and left side alone of the image frame G
Alternatively, in the event of performing tracking in the tilt direction alone, the edge region EDG should be set to at least the upper side and lower side alone of the image frame G
Alternatively, tracking of particular one direction alone may be performed, and in this case, the edge region EDG should be set to particular one side of the image frame G

Also, with the first through third embodiments, tracking of a subject HF has been performed by pan (or tilt), but tracking of a subject HF originally has the object to enable a subject HF to be tracked to be redetected within the image frame G, and in the light of this point, tracking of a subject HF may be performed by zoom. Specifically, zoom-out is performed in response to a subject HF being lost after reaching the edge region EDG existing, thereby enabling the subject HF to be redetected within the image frame G
Note that, upon description being made for confirmation, at the time of performing such tracking using zoom-out, the use of determination of the out-of-frame direction can be eliminated.
Also, it goes without saying that an arrangement may be made wherein such tracking using zoom-out, and tracking using pan/tilt driving as described with the first through third embodiments are combined, whereby tracking of a subj ect HF regarding which out-of-frame has occurred can be performed in a surer manner.

Also, with the first through third embodiments, a condition regarding whether to track a subject HF has included a condition to the effect that the subject HF thereof has been lost, but an arrangement may be made wherein a subject HF being lost is not included in the condition, and in response to a subject HF having reached the edge region EDG, this subject HF is tracked. In other words, this can be regarded as a technique for preventing out-of-frame from occurring.
Upon description being made for confirmation, even in the event of employing such a technique, this is no different from that switching of tracking/non-tracking of a subject is performed according to a positional relation between a subject HF and the edge region EDG

Also, description has been made so far wherein the processing procedure shown in each drawing as a flowchart is executed by the control unit 27 of the digital still camera 1 in accordance with the program.
However, an arrangement may be made wherein at least one of the processing procedures shown in the drawings as flowcharts is executed by the control unit 51 on the signal processing unit 24 or camera platform 10 side. However, control functions for the principal subject search, composition determination, and automatic imaging and recording are provided to the digital still camera 1 side, whereby various types of digital still camera 1 and camera platform 10 can be combined, which is advantageous in respect of versatility.

Also, as an imaging control device according to the present invention, there is no necessarily need to configure the digital still camera 1 and camera platform 10 in a detachable/mountable manner (i.e., state in which this can become a separate device) as with the embodiment, the digital still camera 1 and camera platform 10 may be configured in an integral manner. However, if the digital still camera 1 and camera platform 10 are configured in a detachable/mountable manner as with the embodiments, the digital still camera 1 can be used normally as a camera.

Also, description has been made so far wherein an image to be automatically imaged and recorded is a still image, but may be a moving image generated from images obtained by imaging.

Also, at least part of the configuration based on the present invention can be realized by causing the CPU or DSP to execute the program.
It can be conceived that such a program is stored by being written in, for example, ROM or the like at the time of manufacturing, or first stored in a removable storage medium, and then installing (including updating) from this storage medium into a nonvolatile storage region or flash memory 30 or the like corresponding to the DSP. Also, it can also be conceived to enable the program to be installed based on the control from another device serving as a host via a data interface such as USB (Universal Serial Bus) or IEEE1394 or the like. Further, an arrangement may be made wherein the program is stored in a storage device in a server or the like over a network beforehand, and then a network function is provided to the digital still camera 1, whereby the program can be obtained by being downloaded from the server.

### Reference Signs List

1 digital still camera
2 main unit
21a lens unit
31a release button
10 camera platform
11 main unit
12 camera stand seat portion
13 protruding portion
14 connector
21 optical system
22 image sensor
23 A/D converter
24 signal processing unit
25 encoding/decoding unit
26 media controller
27 control unit
28 ROM
29 RAM
30 flash memory
31 operating unit
32 display driver
33 display unit
34 camera platform handling communication unit
40 memory card
51 control unit
52 communication unit
53 pan mechanical unit
54 pan motor
55 pan driving unit
56 tilt mechanical unit
57 tilt motor
58 tilt driving unit
EDG edge region

## Claims

1. A control device comprising:
a subject detecting unit configured to detect a subject from an imaged image by means of an imaging unit; and
a control unit configured to perform control relating to imaging operation according to a positional relation between an edge region set to at least one side in the image frame of an imaged image by means of said imaging unit, and a subj ect detected within said imaged image by said subject detecting unit.

2. The control device according to Claim 1, wherein said control unit determines whether or not there is a subject disappeared from the inside of said image frame based on an imaged image consecutively obtained by said imaging unit, and in the event that there is a subject disappeared from the inside of said image frame, performs control relating to said imaging operation according to whether or not this disappeared subj ect has reached said edge region before disappearance thereof.

3. The control device according to Claim 2, further comprising:
an imaging field-of-view changing unit configured to drive said imaging unit to the pan or tilt direction to change the field of view by means of said imaging unit;
wherein said control unit controls said imaging field-of-view changing unit to change the filed of view by means of said imaging unit in the event that said disappeared subject has reached said edge region before disappearance thereof.

4. The control device according to Claim 3, wherein said control unit controls, in the event that said disappeared subject has reached said edge region before disappearance thereof, said imaging field-of-view changing unit so as to drive said imaging unit to a side where the edge region that said disappeared subject has reached is provided.

5. The control device according to Claim 3 or Claim 4, wherein said control unit stands by in the event that said disappeared subject has not reached said edge region before disappearance thereof.

6. The control device according to Claim 2, wherein said control unit performs, in the event that there are a plurality of detected subjects within said imaged image, control relating to said imaging operation according to a subject of which the position before disappearance has reached said edge region of the plurality of subjects.

7. The control device according to Claim 3, wherein said control unit determines whether or not the number of detected subjects within said imaged image is greater than one, and in the event that there is a subject that has reached said edge region before said disappearance, and also the number of detected subjects within said imaged image is not greater than one, controls said imaging field-of-view changing unit so as to drive said imaging unit to a side where the edge region that said disappeared subject has reached is provided.

8. The control device according to Claim 7, wherein said control unit performs control and processing for realizing subj ect search for executing detection of a subj ect by means of said subject detecting unit to search a subject while changing the field of view by means of said imaging unit, optimal composition determination for determining a composition determined to be optimal according to the mode of a subject detected along with this subject search in accordance with a predetermined algorithm, composition adjustment with a composition determined to be optimal obtained by this optimal composition determination being set as a target composition, and automatic recording to a recording medium of an imaged image after this composition adjustment,
and also, during said composition adjustment operation, executes said disappeared subject existence determination processing for determining whether or not there is a subject disappeared from the inside of said image frame,
and performs execution control of said optimal composition determination and said composition adjustment in the case that a first condition is satisfied wherein in the event that the number of detected subjects within said imaged image is greater than one, and also in the event that determination is made that there is a disappeared subject due to said disappeared subject existence determination processing, all of disappeared subjects are subjects that have reached said edge region before disappearance, and also there is a non-disappeared subject within said image frame.

9. The control device according to Claim 7, wherein said control unit performs control and processing for realizing subj ect search for executing detection of a subj ect by means of said subject detecting unit to search a subject while changing the field of view by means of said imaging unit, optimal composition determination for determining a composition determined to be optimal according to the mode of a subject detected along with this subject search in accordance with a predetermined algorithm, composition adjustment with a composition determined to be optimal obtained by this optimal composition determination being set as a target composition, and automatic recording to a recording medium of an imaged image after this composition adjustment,
and also, during said composition adjustment operation, executes said disappeared subject existence determination processing for determining whether or not there is a subject disappeared from the inside of said image frame,
and stands by, in the case that a second condition is satisfied wherein in the event that the number of detected subjects within said imaged image is greater than one, and also in the event that determination is made that there is a disappeared subject due to said disappeared subject existence determination processing, there is a subject disappeared without reaching said edge region of the disappeared subj ects, and then determines whether or not a subj ect has been detected within said image frame, and as a result of this determination in the event that determination is made that a subject has been detected within said image frame, performs execution control of said optimal composition determination and said composition adjustment, and as a result of this determination in the event that determination is made that no subject has been detected within said image frame, performs execution control of said subject search.

10. The control device according to Claim 7, wherein said control unit performs control and processing for realizing subj ect search for executing detection of a subj ect by means of said subject detecting unit to search a subject while changing the field of view by means of said imaging unit, optimal composition determination for determining a composition determined to be optimal according to the mode of a subject detected along with this subject search in accordance with a predetermined algorithm, composition adjustment with a composition determined to be optimal obtained by this optimal composition determination being set as a target composition, and automatic recording to a recording medium of an imaged image after this composition adjustment,
and also, during said composition adjustment operation, executes said disappeared subject existence determination processing for determining whether or not there is a subject disappeared from the inside of said image frame,
and also performs execution control of said subj ect search in the case that a third condition is satisfied wherein in the event that the number of detected subjects within said imaged image is greater than one, and also in the event that determination is made that there is a disappeared subject due to said disappeared subject existence determination processing, all of the subjects have reached said edge region before disappearance thereof.

11. The control device according to Claim 7, wherein said control unit further determines whether or not there is a subject equivalent to a preferred subject of detected subjects within said imaged image,
and controls, in the case that the number of detected subj ects within said imaged image is greater than one, and in the event that there is a subject that has reached said edge region before said disappearance, and also there is a subject equivalent to said preferred subject, said imaging field-of-view changing unit so as to drive said imaging unit to a side where said edge region that this preferred subject has reached before disappearance thereof is provided.

12. The control device according to Claim 11, wherein said control unit performs control and processing for realizing subj ect search for executing detection of a subj ect by means of said subject detecting unit to search a subject while changing the field of view by means of said imaging unit, optimal composition determination for determining a composition determined to be optimal according to the mode of a subject detected along with this subject search in accordance with a predetermined algorithm, composition adjustment with a composition determined to be optimal obtained by this optimal composition determination, and automatic recording to a recording medium of an imaged image after this composition adjustment,
and also, during said composition adjustment operation, executes said disappeared subject existence determination processing for determining whether or not there is a subj ect disappeared from the inside of said image frame,
controls, in the case that a fourth condition is satisfied wherein in the event that the number of detected subjects within said imaged image is greater than one, and also in the event that determination is made that there is a disappeared subject due to said disappeared subject existence determination processing, there is a subject that has reached said edge region before said disappearance, and also there is a subject equivalent to said preferred subject thereof, said imaging field-of-view changing unit so as to drive said imaging unit to a side where said edge region that this preferred subject has reached before disappearance thereof is provided,
stands by in the case that a fifth condition is satisfied wherein there is a subj ect that has not disappeared without having reached said edge region of disappeared subjects, and also there is a subject that has reached said edge region before disappearance, but there is no subject equivalent to said preferred subject of subjects that have reached said edge region before this di sappearance,
and also determines, both of after performing control so as to perform driving of said imaging unit along with satisfaction of said fourth condition, and after standby along with satisfaction of said fifth condition, whether or not a subject has been detected within said image frame, and as a result of this determination, in the event that a subject has been detected within said image frame, performs execution control of said optimal composition determination and said composition adjustment, and in the event that no subject has been detected within said image frame, performs execution control of said subj ect search.

13. The control device according to Claim 2, further comprising:
a zooming unit configured to change the field angle of an imaged image by means of said imaging unit;
wherein said control unit controls said zooming unit to perform zoom-out operation in the event that determination is made that said disappeared subject has reached said edge region before disappearance thereof,
and in the event that determination is made that said disappeared subj ect has not reached said edge region before disappearance thereof, stands by.

14. The control device according to Claim 1, further comprising:
a zooming unit configured to change the field angle of an imaged image by means of said imaging unit;
wherein said control unit determines whether or not there is a subject that has reached said edge region after performing zoom-in instructions as to said zooming unit, and in the event that there is a subject that has reached said edge region due to this determination, performs zoom stop instructions as to said zooming unit.

15. The control device according to Claim 1, wherein said control unit performs control so as to determine whether or not a predetermined number of subjects have been detected within the region of inner side than said edge region within said image frame according to switching instructions to a self timer mode, and as a result thereof, in the event that determination is made that said predetermined number of subjects have been detected within the region on said inner side, to activate a self timer according timing when obtaining this determination result, and to perform automatic recording to a recording medium of an imaged image by means of said imaging unit according to predetermined time having elapsed after activation of this self timer.

16. A control method comprising:
a subj ect detecting step arranged to detect a subj ect from an imaged image by means of an imaging unit; and
a control step arranged to perform control relating to imaging operation according to a positional relation between an edge region set to at least one side in the image frame of an imaged image by means of said imaging unit, and a subj ect detected within said imaged image in said subject detecting step.

17. A program causing a control device including a subj ect detecting unit configured to detect a subject from an imaged image by means of an imaging unit to execute
processing to perform control relating to imaging operation according to a positional relation between an edge region set to at least one side in the image frame of an imaged image by means of said imaging unit, and a subject detected within said imaged image by means of said subject detecting unit.

18. A control system including
an imaging device including an imaging unit, and
a movable mechanical device configured to change the field of view by means of said imaging unit,
comprising:
a subject detecting unit configured to detect a subject from an imaged image by means of said imaging unit;
a control unit configured to perform control as to said movable mechanical device according to a positional relation between an edge region set to at least one side in the image frame of an imaged image by means of said imaging unit, and a subj ect detected within said imaged image by means of said subject detecting unit.
